(19) Europäisches Patentamt
European Patent Office
Office européen des brevets

(11) **EP 4 301 065 A1**

(12) **EUROPEAN PATENT APPLICATION**
published in accordance with Art. 153(4) EPC

(43) Date of publication:
**03.01.2024 Bulletin 2024/01**

(21) Application number: **21930846.7**

(22) Date of filing: **18.03.2021**

(51) International Patent Classification (IPC):
**H04W 72/04** (2023.01)

(52) Cooperative Patent Classification (CPC):
**H04W 72/04**

(86) International application number:
**PCT/CN2021/081626**

(87) International publication number:
**WO 2022/193254 (22.09.2022 Gazette 2022/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventors:
• **LI, Shengyu**
  **Shenzhen, Guangdong 518129 (CN)**
• **GUAN, Lei**
  **Shenzhen, Guangdong 518129 (CN)**
• **LI, Ruijie**
  **Shenzhen, Guangdong 518129 (CN)**

(74) Representative: **Huawei European IPR**
**Huawei Technologies Duesseldorf GmbH**
**Riesstraße 25**
**80992 München (DE)**

(54) **COMMUNICATION METHOD, APPARATUS AND SYSTEM**

(57)     This application discloses a communication method, apparatus, and system. A network device sends a first downlink common signal (for example, an SSB) to a terminal device. The terminal device receives system information from the network device based on the SSB. The system information carries information indicating a first frequency domain resource and a second frequency domain resource. The first frequency domain resource and the second frequency domain resource may be two carriers or two BWPs, and the two frequency domain resources correspond to different uplink-downlink configurations. The terminal device selects a first random access resource from a random access resource set based on an association relationship between an SSB and a random access resource to send a random access preamble. The random access resource set includes a random access resource on the first frequency domain resource and a random access resource on the second frequency domain resource. According to the method, the terminal device can select a closest uplink symbol from the two frequency domain resources to initiate random access, so that a random access waiting delay is reduced.

FIG. 8

EP 4 301 065 A1

**Description**

**TECHNICAL FIELD**

Embodiments of this application relate to the field of wireless communication technologies, and specifically, to a communication method, apparatus, and system.

**BACKGROUND**

A 5G communication system is committed to supporting higher system performance, and supports a plurality of service types, different deployment scenarios, and a wider spectrum range. The plurality of service types supported by the 5G communication system include enhanced mobile broadband (enhanced mobile broadband, eMBB), massive machine type communication (massive machine type communication, mMTC), ultra-reliable and low-latency communications (ultra-reliable and low latency communications, URLLC), a multimedia broadcast multicast service (multimedia broadcast multicast service, MBMS), a positioning service, and the like.

Compared with a 4G communication system, a major characteristic of the 5G communication system is that the 5G communication system supports ultra-reliable and low latency services. There are many types of URLLC services. Typical examples include industrial control, industrial production procedure automation, human-computer interaction, telemedicine, and the like.

Currently, a bottleneck of a data transmission delay in 5G new radio (new radio, NR) lies in uplink and downlink waiting delays. For example, existing time division duplex (time division duplex, TDD) frame structures configured in macro cells are usually downlink transmission-dominant structures (referred to as DL-dominant frame structures), resulting in a relatively large waiting delay in uplink transmission (including uplink data transmission and downlink transmission feedback). A method for reducing this waiting delay is to configure a shorter uplink-downlink switching period, for example, a self-contained (Self-contain) frame structure, to increase a proportion of uplink transmission symbols and reduce the uplink waiting delay. This method is not friendly to coexistence of hybrid services in aspects of causing larger switching overheads and pilot/control overheads, difficult product implementation, and heterogeneous interference with the mainstream DL-dominant frame structures of macro cells.

Another method for reducing this waiting delay is to configure supplementary uplink (supplementary uplink, SUL) carriers. To be specific, in addition to corresponding to one normal uplink (normal uplink, NUL) TDD carrier, one downlink TDD carrier is further associated with a carrier resource of another frequency division duplex (frequency division duplex, FDD) band, and the FDD carrier resource is of an uplink-only frame structure. This method has the following problems: Not all bands have configurable SUL resources. In addition, because the SUL is of an uplink-only frame structure, only the uplink waiting delay can be reduced, and for some scenarios in which uplink part-dominant (referred to as UL-dominant) TDD frame structures need to be deployed, a downlink waiting delay cannot be reduced by configuring the SUL.

**SUMMARY**

Embodiments of this application provide a communication method and apparatus, to reduce a waiting delay in an initial access process.

Embodiments of this application may be specifically implemented by using the following technical solutions:

According to a first aspect, a communication method is provided. The method may be performed by a terminal device or a chip system in the terminal device, and the method includes:

receiving a first downlink common signal, where the first downlink common signal indicates a time-frequency location of control information for scheduling system information;
receiving the system information, where the system information carries information indicating a first frequency domain resource and a second frequency domain resource, and the first frequency domain resource and the second frequency domain resource correspond to different uplink-downlink configurations; and
sending, on a first random access resource in a random access resource set, a random access preamble corresponding to the first random access resource, where the random access resource set includes a random access resource on the first frequency domain resource and a random access resource on the second frequency domain resource.

In this embodiment, in an initial access process, the random access resource set of the terminal device includes random access sets separately located on at least two frequency domain resources. Because the at least two frequency domain resources correspond to different uplink-downlink configurations, the terminal device may flexibly select, based on the uplink-downlink configurations, a suitable random access resource from the random access resources corresponding to the at least two frequency domain resources to perform random access, so that a waiting delay in sending the random access preamble can be reduced, thereby reducing an access delay and improving system flexibility.

In a possible design, the method further includes:

determining a downlink common signal resource subset, where the downlink common signal resource subset includes a downlink common signal resource on the first frequency domain resource and/or a downlink common signal resource on the second frequency domain resource;

determining an association relationship between the random access resource set and the downlink common signal resource subset, where the association relationship includes a correspondence between a downlink common signal resource in the downlink common signal resource subset and a random access resource subset in the random access resource set; and

determining, based on the association relationship, a random access resource subset corresponding to a first downlink common signal resource, where the first downlink common signal resource is a resource corresponding to the first downlink common signal, and is a resource in the downlink common signal resource subset, all random access resources in the random access resource subset belong to the random access resource set, and the random access resource subset includes the first random access resource.

In a possible design, the determining a downlink common signal resource subset includes:

receiving first indication information and second indication information, determining a first downlink common signal resource subset based on the first indication information, where a downlink common signal in the first downlink common signal resource subset belongs to the first frequency domain resource, and determining a second downlink common signal resource subset based on the second indication information, where a downlink common signal in the second downlink common signal resource subset belongs to the second frequency domain resource, and the downlink common signal resource subset is a union set of the first downlink common signal resource subset and the second downlink common signal resource subset.

In a possible design, the association relationship includes at least one of a first association relationship, a second association relationship, a third association relationship, or a fourth association relationship, the first association relationship is an association relationship between a first random access resource set on the first frequency domain resource and the first downlink common signal resource subset, the second association relationship is an association relationship between a second random access resource set on the second frequency domain resource and the first downlink common signal resource subset, the third association relationship is an association relationship between the first random access resource set on the first frequency domain resource and the second downlink common signal resource subset, and the fourth association relationship is an association relationship between the second random access resource set on the second frequency domain resource and the second downlink common signal resource subset.

In this implementation, two pieces of indication information are used to separately indicate downlink common signal resources on the first frequency domain resource and the second frequency domain resource, to match parameters such as frame structures and subcarrier spacings of the two frequency domain resources, thereby improving indication efficiency.

In another possible design, the determining a downlink common signal resource subset includes:

receiving third indication information, and determining a third downlink common signal resource subset based on the third indication information, where the downlink common signal resource subset is equal to the third downlink common signal resource subset, the third downlink common signal resource subset is a subset of a third downlink common signal resource set, the third downlink common signal resource set corresponds to a third downlink common signal pattern, and the third downlink common signal resource set includes a downlink common signal resource on the first frequency domain resource and a downlink common signal resource on the second frequency domain resource.

In a possible design, the method further includes:

receiving downlink common signal pattern indication information, where the downlink common signal pattern indication information indicates an index of the third downlink common signal pattern, and the third downlink common signal pattern is used to define a time domain location of each common signal in the third downlink common signal set on the first frequency domain resource or the second frequency domain resource.

In this implementation, one pattern is used to jointly indicate a set of downlink common signal resources on the first frequency domain resource and the second frequency domain resource, and then one piece of indication information indicates an index that is in the set and that corresponds to a common signal belonging to the downlink common signal resource subset, so that configuration flexibility can be improved.

In a possible design, the method further includes:

detecting second downlink control information DCI at a PDCCH monitoring location in a second physical downlink control channel PDCCH monitoring location set; and/or

detecting second DCI at a PDCCH monitoring location in a third PDCCH monitoring location set, where the second DCI is used to schedule a second physical downlink shared channel PDSCH, the PDCCH monitoring location in the second PDCCH monitoring location set is on the first frequency domain resource and is located in a first sub-time window, the PDCCH monitoring location in the third PDCCH monitoring location set is on the second frequency domain resource and is located in a second sub-time window, and the first sub-time window and the second sub-time window are determined based on the first random access resource.

In this implementation, the second DCI is detected at one or more PDCCH detection locations of the first frequency domain resource or the second frequency domain resource, and therefore a suitable resource may be flexibly selected from at least two frequency domain resources based on uplink-downlink configurations to send the second DCI for scheduling a random access response, so that a delay in sending the second DCI can be reduced, and system flexibility can be improved.

In a possible design, when a second monitoring location in the second PDCCH monitoring location set and a third monitoring location in the third PDCCH monitoring location set overlap in time domain, a symbol on which the second monitoring location is located is a downlink symbol or a flexible symbol, and a symbol on which the third monitoring location is located includes an uplink symbol, the second DCI is detected at the second monitoring location; or

when a second monitoring location in the second PDCCH monitoring location set and a third monitoring location in the third PDCCH monitoring location set overlap in time domain, a symbol on which the second monitoring location is located is a downlink symbol or a flexible symbol, and a symbol on which the third monitoring location is located is also a downlink symbol or a flexible symbol, the second DCI is monitored at a fourth monitoring location, where the fourth monitoring location is one of the second monitoring location and the third monitoring location.

In a possible design, the second DCI is scrambled by using a random access radio network temporary identifier RA-RNTI, and a value of the RA-RNTI is determined based on a frequency domain resource on which the first random access resource is located and a time-frequency location of the first random access resource in the frequency domain resource on which the first random access resource is located.

In a possible design, the method further includes:

receiving a random access response RAR, where the RAR is carried on the second PDSCH, the RAR is used to schedule a first physical uplink shared channel PUSCH, the RAR carries indication information indicating a fourth frequency domain resource, and the fourth frequency domain resource belongs to the first frequency domain resource or the second frequency domain resource; and

sending the first PUSCH on the fourth frequency domain resource.

In this implementation, the RAR carries indication information sent by the RAR on the first frequency domain resource or the second frequency domain resource, and therefore a frequency domain resource that has a closest uplink part may be selected based on frame structures of the two frequency domain resources to send the first PUSCH, so that a delay in sending the first PUSCH is reduced.

In a possible design, the method further includes:

detecting third DCI at a PDCCH monitoring location in a fourth PDCCH monitoring location set; and/or

detecting third DCI at a PDCCH monitoring location in a fifth PDCCH monitoring location set, where the third DCI is used to schedule a third PDSCH; and the PDCCH monitoring location in the fourth PDCCH monitoring location set is on the first frequency domain resource and is located in a third sub-time window, the PDCCH monitoring location in the fifth PDCCH monitoring location set is on the second frequency domain resource and is located in a fourth sub-time window, and the third sub-time and the fourth sub-time window are determined based on a time domain location of the first PUSCH.

In this implementation, the third DCI is detected at one or more PDCCH detection locations of the first frequency domain resource or the second frequency domain resource, and therefore a suitable resource may be flexibly selected from at least two frequency domain resources based on uplink-downlink configurations to send the third DCI for scheduling the third PDSCH, so that a delay in sending the third DCI can be reduced, and system flexibility can be improved.

In a possible design, when a fifth monitoring location in the fourth PDCCH monitoring set and a sixth monitoring location in the fifth PDCCH monitoring set overlap in time domain, a symbol on which the fifth monitoring location is located is a downlink symbol or a flexible symbol, and a symbol on which the sixth monitoring location is located includes an uplink symbol, the third DCI is detected at the fifth monitoring location; or

when a fifth monitoring location in the fourth PDCCH monitoring set and a sixth monitoring location in the fifth PDCCH monitoring set overlap in time domain, a symbol on which the fifth monitoring location is located is a downlink symbol or a flexible symbol, and a symbol on which the sixth monitoring location is located is a downlink symbol or a flexible symbol, the third DCI is detected at a seventh monitoring location, where the seventh monitoring location is a preset monitoring location in the fifth monitoring location and the sixth monitoring location.

In a possible design, the third DCI carries information indicating a sixth frequency domain resource, the sixth frequency domain resource belongs to the first frequency domain resource or the second frequency domain resource, and the method further includes: sending feedback information of the third PDSCH on the sixth frequency domain resource. The feedback information of the third PDSCH is carried by using a second PUCCH.

In this implementation, the third DCI indicates that the second PUCCH is sent on the first frequency domain resource or the second frequency domain resource, and therefore a frequency domain resource that has a closest uplink part may be selected based on frame structures of the two frequency domain resources to send the second PUCCH, so that a delay in sending the second PUCCH is reduced.

According to a second aspect, a communication method is provided. The method may be performed by a network device or a chip system in the network device, and the method includes:

sending a first downlink common signal to a terminal device, where the first downlink common signal indicates a time-frequency location of control information for scheduling system information;
sending the system information to the terminal device, where the system information carries information indicating a first frequency domain resource and a second frequency domain resource, and the first frequency domain resource and the second frequency domain resource correspond to different uplink-downlink configurations; and
receiving, on a first random access resource, a random access preamble corresponding to the first random access resource, where the first random access resource belongs to a random access resource subset, the random access resource subset is a subset of a random access resource set, and the random access resource set includes a random access resource on the first frequency domain resource and a random access resource on the second frequency domain resource.

In a possible design, the sending a first downlink common signal to a terminal device includes:
sending a downlink common signal on a downlink common signal resource in a downlink common signal resource subset, where the downlink common signal resource subset includes the first downlink common signal.

In a possible design, the method further includes:
determining, based on an association relationship between the random access resource set and the downlink common signal resource subset, a random access resource subset corresponding to a resource of the first downlink common signal, where the association relationship includes a correspondence between a downlink common signal resource in the downlink common signal resource subset and a random access resource subset in the random access resource set; and the resource of the first downlink common signal is a resource corresponding to the first downlink common signal, and is a resource in the downlink common signal resource subset.

In a possible design, the system information further carries first indication information and second indication information, the first indication information indicates location information of a first downlink common signal resource subset, the second indication information indicates location information of a second downlink common signal resource subset, a downlink common signal in the first downlink common signal resource subset belongs to the first frequency domain resource, a downlink common signal in the second downlink common signal resource subset belongs to the second frequency domain resource, and the downlink common signal resource subset is a union set of the first downlink common signal resource subset and the second downlink common signal resource subset.

In a possible design, the association relationship includes at least one of a first association relationship, a second association relationship, a third association relationship, or a fourth association relationship, the first association relationship is an association relationship between a first random access resource set on the first frequency domain resource and the first downlink common signal resource subset, the second association relationship is an association relationship between a second random access resource set on the second frequency domain resource and the first downlink common signal resource subset, the third association relationship is an association relationship between the first random access resource set on the first frequency domain resource and the second downlink common signal resource subset, and the fourth association relationship is an association relationship between the second random access resource set on the second frequency domain resource and the second downlink common signal resource subset.

In a possible design, the system information further carries third indication information, the third indication information indicates location information of a third downlink common signal resource subset, the downlink common signal resource subset is equal to the third downlink common signal resource subset, the third downlink common signal resource subset is a subset of a third downlink common signal resource set, the third downlink common signal resource set corresponds to a third downlink common signal pattern, and common signal resources included in the third downlink common signal resource set are located on the first frequency domain resource and the second frequency domain resource.

In a possible design, the method further includes:
sending common signal pattern indication information, where the downlink common signal pattern indication information indicates an index of the third downlink common signal pattern, and the third downlink common signal pattern is used to define a time domain location of each common signal in the third downlink common signal set on the first frequency domain resource or the second frequency domain resource.

In a possible design, the method further includes:

sending second downlink control information DCI at a PDCCH monitoring location in a second physical downlink control channel PDCCH monitoring location set; and/or
sending second DCI at a PDCCH monitoring location in a third PDCCH monitoring location set, where
the second DCI is used to schedule a second PDSCH, the PDCCH monitoring location in the second PDCCH monitoring location set is on the first frequency domain resource and is located in a first sub-time window, the PDCCH monitoring location in the third PDCCH monitoring location set is on the second frequency domain resource and is located in a second sub-time window, and the first sub-time window and the second sub-time window are determined based on the first random access resource.

In a possible design, the method further includes:

when a second monitoring location in the second PDCCH monitoring location set and a third monitoring location in the third PDCCH monitoring location set overlap in time domain, a symbol on which the second monitoring location is located is a downlink symbol or a flexible symbol, and a symbol on which the third monitoring location is located includes an uplink symbol, sending the second DCI at the second monitoring location; or
when a second monitoring location in the second PDCCH monitoring location set and a third monitoring location in the third PDCCH monitoring location set overlap in time domain, a symbol on which the second monitoring location is located is a downlink symbol or a flexible symbol, and a symbol on which the third monitoring location is located is also a downlink symbol or a flexible symbol, sending the second DCI at a fourth monitoring location, where the fourth monitoring location is one of the second monitoring location and the third monitoring location.

In a possible design, the second DCI is scrambled by using a random access radio network temporary identifier RA-RNTI, and a value of the RA-RNTI is determined based on a frequency domain resource on which the first random access resource is located and a time-frequency location of the first random access resource in the frequency domain resource on which the first random access resource is located.

In a possible design, the method further includes:

sending a random access response RAR to a terminal device, where the RAR is carried on the second PDSCH, the RAR is used to schedule a first physical uplink shared channel PUSCH, the RAR carries information indicating a fourth frequency domain resource, and the fourth frequency domain resource belongs to the first frequency domain resource or the second frequency domain resource; and
receiving the first PUSCH on the fourth frequency domain resource.

In a possible design, the method further includes:

sending third DCI at a PDCCH monitoring location in a fourth PDCCH monitoring location set; and/or
sending third DCI at a PDCCH monitoring location in a fifth PDCCH monitoring location set, where
the third DCI is used to schedule a third PDSCH; and the PDCCH monitoring location in the fourth PDCCH monitoring location set is on the first frequency domain resource and is located in a third sub-time window, the PDCCH monitoring location in the fifth PDCCH monitoring location set is on the second frequency domain resource and is located in a fourth sub-time window, and the third sub-time and the fourth sub-time window are determined based on a time domain location of the first PUSCH.

In a possible design, when a fifth monitoring location in the fourth PDCCH monitoring set and a sixth monitoring location in the fifth PDCCH monitoring set overlap in time domain, a symbol on which the fifth monitoring location is located is a downlink symbol or a flexible symbol, and a symbol on which the sixth monitoring location is located includes an uplink symbol, the third DCI is detected at the fifth monitoring location; or
when a fifth monitoring location in the fourth PDCCH monitoring set and a sixth monitoring location in the fifth PDCCH monitoring set overlap in time domain, a symbol on which the fifth monitoring location is located is a downlink symbol or a flexible symbol, and a symbol on which the sixth monitoring location is located is a downlink symbol or a flexible symbol, the third DCI is sent at a seventh monitoring location, where the seventh monitoring location is a preset monitoring location in the fifth monitoring location and the sixth monitoring location.

In a possible design, the third DCI carries information indicating a sixth frequency domain resource, the sixth frequency domain resource belongs to the first frequency domain resource or the second frequency domain resource, and the method further includes: receiving feedback information HARQ-ACK of the third PDSCH on the sixth frequency domain resource, where the sixth frequency domain resource belongs to the first frequency domain resource or the second frequency domain resource.

According to a third aspect, a communication method is provided. The method may be performed by a terminal device or a chip system in the terminal device, and the method includes:

receiving a first common signal;

determining a frequency domain resource of a second downlink common signal based on a frequency domain resource of the first downlink common signal; and

receiving the second downlink common signal on the frequency domain resource of the second downlink common signal.

According to a fourth aspect, a communication method is provided. The method may be performed by a network device or a chip system in the network device, and the method includes:

sending first-type downlink common signals, where the first-type downlink common signals include one or more common signals; and

sending second-type downlink common signals, where the second-type downlink common signals include one or more common signals, where a frequency domain resource of the second-type common signal is related to a frequency domain resource of the first-type downlink common signal.

Correspondingly, this application further provides a communication apparatus. The apparatus may implement the communication method according to the first aspect, the second aspect, the third aspect, or the fourth aspect. For example, the apparatus may be a terminal device or a network device, or may be another apparatus that can implement the foregoing communication method. The apparatus may implement the foregoing method by software, hardware, or hardware executing corresponding software.

In a possible design, the apparatus may include a processor and a memory. The processor is configured to support the apparatus in performing a corresponding function in the method according to any one of the foregoing aspects. The memory is configured to be coupled to the processor, and stores program instructions and data that are necessary for the apparatus. In addition, the apparatus may further include a communication interface, configured to support communication between the apparatus and another apparatus. The communication interface may be a transceiver or a transceiver circuit.

According to still another aspect, an embodiment of this application provides a communication system. The system includes the communication apparatus according to the foregoing aspect.

Still another aspect of this application provides a computer-readable storage medium. The computer-readable storage medium stores instructions. When the instructions run on a computer, the computer is enabled to perform the methods according to the foregoing aspects.

Still another aspect of this application provides a computer program product including instructions. When the computer program product runs on a computer, the computer is enabled to perform the methods according to the foregoing aspects.

This application further provides a chip system. The chip system includes a processor, and may further include a memory. The chip system is configured to implement the method in any one of the foregoing aspects.

Any apparatus, computer storage medium, computer program product, chip system, or communication system provided above is configured to perform a corresponding method provided above. Therefore, for beneficial effects that can be achieved by the apparatus, the computer storage medium, the computer program product, the chip system, or the communication system, refer to beneficial effects of corresponding solutions in the corresponding method provided above. Details are not described herein again.

## BRIEF DESCRIPTION OF DRAWINGS

FIG. 1 is a schematic diagram of an architecture of a communication system to which embodiments of this application are applied;

FIG. 2 is a schematic diagram of a time-frequency resource occupied by an SSB according to this application;

FIG. 3 is a schematic diagram of an SSB pattern according to this application;

FIG. 4 is a schematic diagram of sending a message in an initial access procedure in a DL-dominant slot configuration according to this application;

FIG. 5 is a schematic diagram of a UL-dominant slot configuration according to this application;

FIG. 6 is a schematic diagram of an SSB period and an SSB pattern according to this application;

FIG. 7 is a schematic flowchart of an embodiment of a communication method according to this application;

FIG. 8 is a schematic flowchart of another embodiment of a communication method according to this application;

FIG. 9 is a schematic diagram of a structure of an embodiment of a communication apparatus according to embodiments of this application; and

FIG. 10 is a schematic diagram of a structure of another embodiment of a communication apparatus according to embodiments of this application.

## DESCRIPTION OF EMBODIMENTS

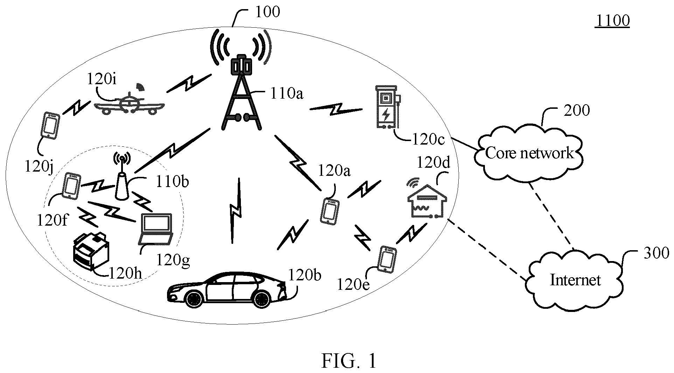

Embodiments of this application may be applied to a 5G mobile communication system, and may also be applied to a 6G mobile communication system and a future mobile communication system. FIG. 1 is a schematic diagram of an architecture of a communication system 1100 to which embodiments of this application are applied. As shown in FIG. 1, the communication system includes a radio access network 100 and a core network 200. Optionally, the communication system 1100 may further include an internet 300. The radio access network 100 may include at least one radio access network device (for example, 110a and 110b in FIG. 1), and may further include at least one terminal (for example, 120a to 120j in FIG. 1). The terminal is wirelessly connected to the radio access network device, and the radio access network device is wirelessly or wiredly connected to the core network. A core network device and the radio access network device may be independent and different physical devices, or functions of the core network device and logical functions of the radio access network device are integrated into a same physical device, or some of functions of the core network device and some of functions of the radio access network device are integrated into one physical device. A wired or wireless manner may be used for connection between terminals and between radio access network devices. FIG. 1 is only a schematic diagram. The communication system may further include another network device, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), or a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a Wi-Fi system, or the like. Alternatively, the radio access network device may be a module or a unit that implements some functions of the base station, for example, may be a central unit (central unit, CU), or may be a distributed unit (distributed unit, DU). The radio access network device may be a macro base station (for example, 110a in FIG. 1), or may be a micro base station or an indoor station (for example, 110b in FIG. 1), or may be a relay node, a donor node, or the like. A specific technology and a specific device form that are used by the radio access network device are not limited in embodiments of this application. For ease of description, the following describes an example in which a base station is used as a radio access network device.

The terminal may also be referred to as a terminal device, user equipment (user equipment, UE), a mobile station, a mobile terminal, or the like. Terminals may be widely used in various scenarios, for example, device-to-device (device-to-device, D2D) communication, vehicle to everything (vehicle to everything, V2X) communication, machine-type communication (machine-type communication, MTC), and internet of things (internet of thing, IoT) communication, virtual reality, augmented reality, industrial control, autonomous driving, telemedicine, a smart grid, smart furniture, a smart office, smart wear, intelligent transportation, and a smart city. The terminal may be a mobile phone, a tablet computer, a computer with a wireless sending/receiving function, a wearable device, a vehicle, an uncrewed aerial vehicle, a helicopter, an airplane, a ship, a robot, a robotic arm, a smart household device, or the like. A specific technology and a specific device form that are used by the terminal are not limited in embodiments of this application.

The base station and the terminal may be fixed or movable. The base station and the terminal may be deployed on land, including an indoor, an outdoor, a handheld, or a vehicle-mounted base station and an indoor, an outdoor, a handheld, or a vehicle-mounted terminal device; or may be deployed on a water surface; or may be deployed on an airplane, a balloon, or a satellite in the air. Application scenarios of the base station and the terminal are not limited in embodiments of this application.

Roles of the base station and the terminal may be opposite. For example, a helicopter or an uncrewed aerial vehicle 120i in FIG. 1 may be configured as a mobile base station. For a terminal 120j that accesses the radio access network 100 by using 120i, the terminal 120i is a base station. However, for a base station 110a, 120i is a terminal, in other words, communication between 110a and 120i is performed by using a wireless air interface protocol. Certainly, communication may alternatively be performed between 110a and 120i by using an interface protocol between base stations. In this case, 120i is also a base station relative to 110a. Therefore, the base station and the terminal may be collectively referred to as a communication apparatus, 110a and 110b in FIG. 1 may be referred to as communication apparatuses having a base station function, and 120a to 120j in FIG. 1 may be referred to as communication apparatuses having a terminal function.

Communication between the base station and the terminal, between base stations, and between terminals may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum that is at least 6 GHz, or may be performed by using both a spectrum below 6 GHz and a spectrum that is at least 6 GHz. A spectrum resource used for wireless communication is not limited in embodiments of this application.

In embodiments of this application, a function of the base station may be performed by a module (for example, a chip) in the base station, or may be performed by a control subsystem including a base station function. The control subsystem including a base station function herein may be a control center in the foregoing application scenarios such as a smart grid, industrial control, intelligent transportation, and a smart city. A function of the terminal may be performed by a module (for example, a chip or a modem) in the terminal, or may be performed by an apparatus including a terminal function.

In this application, the base station sends a downlink signal or downlink information to the terminal, where the downlink information is carried on a downlink channel. The terminal sends an uplink signal or uplink information to the base station, where the uplink information is carried on an uplink channel. To communicate with the base station, the terminal needs to establish a wireless connection to a cell controlled by the base station. A cell that establishes a wireless connection to the terminal is referred to as a serving cell of the terminal. When communicating with the serving cell, the terminal is further exposed to interference from a signal of an adjacent cell.

A process in which the terminal device switches from an idle (idle) mode to a connected (connected) mode when accessing a cell in an NR system mainly includes three steps: synchronization signal and PBCH (synchronization signal and PBCH block, SSB) detection, system information block 1 (system information block 1, SIB1) reception, and a random access process.

1. SSB detection

Through SSB detection, the terminal device obtains a cell identity (identity, ID), completes downlink timing synchronization, and determines a time-frequency location of downlink control information (downlink control information, DCI) for scheduling an SIB1, to receive other system information. However, the terminal device does not complete uplink timing synchronization. Therefore, the terminal device can receive broadcast information, but cannot transmit uplink data or receive downlink unicast/multicast transmission.

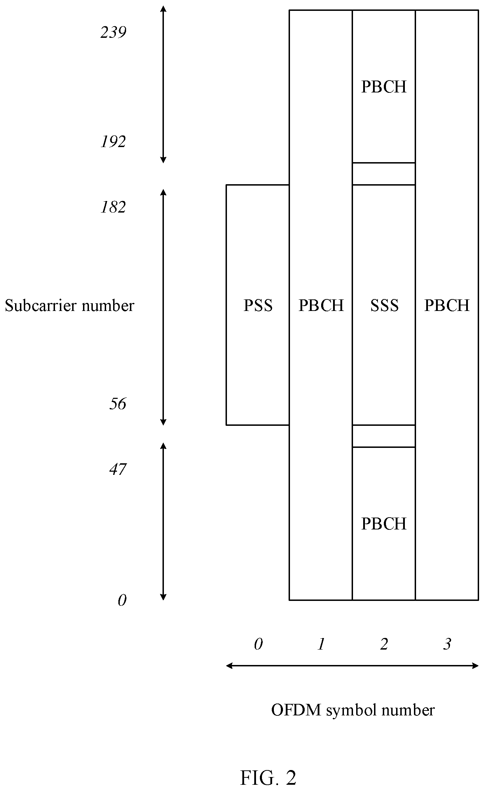

An SSB includes a synchronization signal (synchronization signal, SS) and a physical broadcast channel (physical broadcast channel, PBCH). The synchronization signal includes a primary synchronization signal (Primary SS, PSS) and a secondary synchronization signal (secondary SS, SSS). The physical broadcast channel carries a master information block (master information block, MIB) of an accessed cell. The synchronization signal and the physical broadcast channel are used to obtain a physical cell ID, perform downlink timing, and obtain the most important system information MIB. The physical cell ID is jointly carried by the PSS and the SSS. As shown in FIG. 2, in NR, the SSB occupies four consecutive symbols in time domain, and occupies 20 resource blocks (resource block, RB) in frequency domain.

A location of the SSB in frequency domain is defined by a synchronization raster (raster). Specifically, there is a specific quantity of synchronization raster locations in each band defined by 3GPP. Each synchronization raster location corresponds to one absolute frequency location, and the absolute frequency domain location corresponds to a center frequency of the SSB, that is, a center frequency of the first subcarrier of the eleventh RB. Correspondingly, when performing cell search, the terminal device detects, for each band based on a historical record or through blind detection, whether there is an SSB at a potential synchronous raster location in the band.

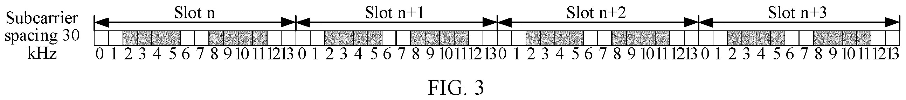

A time domain location of the SSB is defined by an SSB pattern (pattern). One SSB pattern specifies a time domain location of one group of consecutive SSBs in a half-frame (Half-Frame). Currently, 3GPP defines five SSB patterns for the licensed spectrum (unshared spectrum), and each SSB pattern has an applicable subcarrier spacing (subcarrier spacing, SCS). However, only one or two SSB patterns are available to each band. A current mainstream NR band n78 (3.3 GHz to 3.8 GHz) is used as an example. The band supports only one SSB pattern. As shown in FIG. 3, for example, a subcarrier spacing applicable to the SSB pattern is 30 kHz. One SSB pattern includes eight SSBs, SSB indexes (index) are 0 to 7, and the SSB pattern is located in the first four slots (slot) in a half-frame. Each slot includes two SSBs whose start symbols are #2 and #8.

Correspondingly, when the terminal device performs cell search, after obtaining an SSB in a searched band through detection, the terminal device needs to complete downlink timing synchronization based on a time domain location of the detected SSB, an SSB index, and a radio frame index frame index and a radio half-frame index half-frame index in an MIB.

2. SIB1 reception

The terminal device may determine a receiving location of the SIB1 based on the SSB. The SIB1 is carried on a physical downlink shared channel (physical downlink shared channel, PDSCH), but both a time-frequency location and a transmission parameter of the PDSCH carrying the SIB1 are indicated by DCI. An MIB in the SSB includes controlResourceSetZero of 4 bits and searchSpaceZero of 4 bits, which respectively indicate a frequency domain location and a time domain location of the DCI for receiving and scheduling the SIB 1.

After determining the time-frequency location of the DCI for scheduling the SIB1, the terminal device blindly detects the DCI at the time-frequency location of the DCI. If the DCI is detected, the terminal device may receive the PDSCH on a specified time-frequency resource based on an indication of the DCI and a specified parameter, to obtain the SIB 1. A main function of the SIB1 is to complete configuration of a primary cell (Primary Cell, PCell), so that a terminal device in the idle mode listens to a paging message, or completes uplink timing synchronization through random access to switch to the connected mode. Currently, a frequency domain offset (offset) is first configured for the SIB 1 in NR to determine a frequency domain anchor. One serving cell (denoted as a PCell) is configured based on the anchor. A TDD frame structure, a downlink (downlink, DL) configuration, and an uplink (uplink, UL) configuration of the PCell are mainly included. The UL configuration further includes NUL and SUL.

DL configuration: Downlink common parameters of the PCell are mainly configured. For NR, a plurality of resource grids (resource grid) are first configured based on a subcarrier spacing SCS. Each resource grid is a resource division of the PCell in a case of the SCS. An initial downlink bandwidth part is further configured by using an information element InitialDLBWP, to indicate a bandwidth part (bandwidth part, BWP) used for downlink transmission before initial access. InitialDLBWP mainly includes a physical downlink control channel (physical downlink control channel, PDCCH) configuration and a PDSCH configuration. The PDCCH configuration defines a plurality of search spaces (search space, SS) and a control resource set (control resource set, CORESET), to indicate where and how the terminal device detects DCI. The PDSCH configuration is used to define a configuration of potential parameters for PDSCH transmission.

NUL configuration: Normal uplink common parameters of the PCell are mainly configured. For NR, a plurality of resource grids are first configured based on a subcarrier spacing SCS. Each resource grid is a resource division of the PCell in a case of the SCS. A BWP used for uplink transmission before initial access is further indicated by using an information element InitialULBWP. InitialULBWP mainly includes a physical uplink shared channel (physical uplink shared channel, PUSCH) configuration, a physical uplink control channel (physical uplink control channel, PUCCH) configuration, and a random access channel (random access channel, RACH) configuration. The PUSCH configuration and the PUCCH configuration define parameter configurations for sending a PUSCH (for example, a subsequent Msg3) and a PUCCH (for example, ACK/NACK feedback of a subsequent Msg4) by the terminal device before initial access. The RACH configuration defines a parameter configuration for performing random access by the terminal device.

SUL configuration: Auxiliary uplink common parameters of the PCell are mainly configured. For some bands, 3GPP allows an SUL to be configured. In other words, one cell includes one SUL carrier in addition to one normal downlink carrier (carrier) and one normal uplink carrier. Currently, all SUL carriers are of an uplink-only frame structure. The SUL configuration also includes the information element initialULBWP, and initialULBWP also includes the RACH configuration.

The terminal device obtains the most basic information of the PCell by receiving the SIB1, and therefore, may receive more system information based on a configuration parameter, and may choose to remain in the idle mode, and periodically listen to downlink paging. Alternatively, the terminal device initiates random access by using a configured RACH, obtains uplink timing synchronization, and obtains a cell-radio network temporary identifier (Cell-Radio Network Temporary Identifier, C-RNTI), to receive a specific parameter configuration of the terminal device and perform uplink and downlink transmission.

3. Random access (random access, RA)

An NR protocol defines 4-step (4-Step) RA and 2-step (2-Step) RA.

A 4-step RA procedure is as follows:

(1) Send a message 1 (message 1, Msg1).

The Msg1 is a physical random access channel (physical random access channel, PRACH). After obtaining the RACH configuration, the terminal device may send a random access preamble preamble to the network device on an indicated RACH time-frequency resource. A RACH time domain location is indicated by an information element RACHConfig in the SIB 1. A slot is used as a period for repetition. Each slot may have one or more RACH occasions (occasion), and both a start symbol and a length of the RACH occasion are configured by a higher layer. A maximum of eight RACH frequency domain locations are available, and an RB occupied by each location is configured by using higher layer signaling.

Random access resources (RACH resources) include a RACH occasion and a RACH preamble (preamble). The RACH occasion may also be referred to as a RACH time-frequency resource. All of a RACH occasion selected by the terminal device, a preamble to be sent by the terminal device, and a spatial filtering setting (for example, a transmit beam) to be used by the terminal device need to be determined based on an associated SSB index. An association relationship between an SSB and a RACH resource (SSB-RACH Association) defines a correspondence between an SSB and a RACH resource. SSBs are in a one-to-one correspondence with SSB indexes. Specifically, the terminal device determines active (active) SSB indexes, namely, actively sent SSB indexes, based on an information element ssb-PositioninBurst in the SIB1. Then the active SSB indexes are sorted in ascending order, RACH occasions are sorted in a frequency-first-time-second order, and the active SSB indexes and the RACH occasions are associated one by one. There are two cases for the SSB-RACH association. As shown in Table 1, one SSB index is associated with at least one RACH occasion. Alternatively, as shown in Table 2, a plurality of SSB indexes are associated with one RACH occasion, but are associated with different preamble index sets corresponding to the RACH occasion.

**Table 1**

| SSB index | RACH occasion index |
|---|---|
| 0 | {#0, #1, ..., #(N-1)} |
| Inactive (Inactive) | NULL |
| 2 | {#N, #(N+1), ..., #(2N-1)} |
| ... | ... |

**Table 2**

| SSB index | RACH occasion index | Preamble index |
|---|---|---|
| 0 | #0 | #0, #1, ..., #31 |
| Inactive | NULL | NULL |
| 2 | #0 | #32, #33, ..., #63 |
| 3 | #1 | #0, #1, ..., #31 |
| 4 | #1 | #32, #33, ..., #63 |
| ... | ... | ... |

The terminal device measures an SSB, and chooses, based on reference signal received power (Reference Signal Received Power, RSRP) of the SSB, whether to initiate random access on an NUL or an SUL. Provided that an uplink carrier for initiating random access is determined, ACKs/NACKs of the Msg1, the Msg3, and the Msg4 are all sent on the same uplink carrier. Then an SSB index of an SSB whose RSRP is greater than a specified threshold (configured by a higher layer) is selected, and a RACH occasion and a preamble index set that can be selected are determined based on the SSB-RACH association. When there are a plurality of RACH occasions and preamble index sets that can be selected, if there is a selection criterion, the terminal device selects a RACH occasion and a preamble from the plurality of RACH occasions and preamble index sets according to the selection criterion. For example, the terminal device may select the preamble based on a size of the Msg3. When there are a plurality of RACH occasions and preamble index sets that can be selected, and there is no other selection criterion, the terminal device randomly selects a RACH occasion and a preamble from the plurality of RACH occasions and preamble index sets. The Msg1 is sent based on a spatial filtering setting used when a corresponding SSB is received. It should be noted that the Msg1 can be sent only on an uplink symbol, and time domain locations at which uplink symbols are located are determined based on a TDD frame structure in a PCell configuration.

(2) Receive the message 2 (message 2, Msg2).

The Msg2 is a random access response (Random Access Response, RAR). After sending the Msg1, the terminal device monitors, in a specified time domain window and a type 1 (Type 1) common search space (Common SS, CSS), DCI that is sent by the network device and that is scrambled by using a random access radio network temporary identifier (Random Access RNTI, RA-RNTI). A time domain location and a frequency domain location of the type 1 CSS are configured in the foregoing information element InitialDLBWP. The RA-RNTI is determined based on a RACH occasion on which the terminal device sends the Msg1, and is calculated in the following manner:

$$\text{RA-RNTI} = 1 + s_{\text{ID}} + 14 \times t_{\text{ID}} + 14 \times 80 \times f_{\text{ID}} + 14 \times 80 \times 80 \times \text{ul\_carrier\_id} \quad ,$$

where

$s_{\text{ID}}$ and $t_{\text{ID}}$ respectively indicate a start symbol index of a slot slot in which the RACH occasion is located and an index of the slot in a frame, $f_{\text{ID}}$ indicates a frequency domain location index of the RACH occasion, and ul_carrier id indicates a UL carrier index. For an NUL carrier, a corresponding UL carrier index is 0, and for an SUL carrier, a corresponding UL carrier index is 1.

If the terminal device obtains, through detection, the DCI scrambled by using the RA-RNTI, the terminal device receives a PDSCH scheduled by using the DCI. A medium access control (medium access control, MAC) protocol data unit (Protocol Data Unit, PDU) carried on the PDSCH carries a plurality of sub-protocol data units subPDUs. Each subPDU includes one MAC header (header) to indicate one preamble index, and includes one MAC RAR. The RAR includes uplink scheduling information for a terminal device that sends the preamble.

The RAR has three main functions: sending an initial uplink transmission timing advance (Timing Advance, TA) to help the terminal device complete uplink timing synchronization; sending a temporary cell-radio network temporary identifier (Temporary C-RNTI, TC-RNTI) to replace the C-RNTI for use by the terminal device before initial access is completed; and sending an uplink grant (UL grant) to schedule a PUSCH to carry the subsequent Msg3 for sending.

(3) Send the message 3 (message 3, Msg3).

If the terminal device receives an RAR, the terminal device sends the Msg3 to the network device on a scheduled PUSCH based on a TA indicated by the RAR. Data on the PUSCH is scrambled by using a TC-RNTI, and data content on the PUSCH includes an identifier (identifier, ID) of the terminal device.

(4) Receive the message 4 (message 4, Msg4).

After sending the Msg3, the terminal device detects, in a corresponding time window, DCI that is sent by the network device and that is scrambled by using a TC-RNTI (Temporary C-RNTI, temporary cell-radio network temporary identifier). If the DCI is detected, the terminal device further receives a corresponding PDSCH. The PDSCH includes a contention resolution identifier (contention resolution identifier). If the contention resolution identifier is equal to the ID of the terminal device, it indicates that conflict resolution succeeds, and the terminal device converts the TC-RNTI into a C-RNTI.

After the terminal device parses out the DCI scrambled by using the TC-RNTI, if PDSCH decoding succeeds, the terminal device feeds back an acknowledgement (acknowledgement, ACK) to the network device. If PDSCH decoding fails, the terminal device feeds back a negative acknowledgement (negative acknowledgment, NACK) to the network device. A PUCCH resource for feeding back the ACK/NACK is also indicated by the DCI.

A 2-step RACH procedure is as follows:

(1) Send a message A (message A, MsgA).

The MsgA is a RACH. The terminal device sends the RACH to the network device, and then sends a PUSCH on a PUSCH sending occasion. The RACH and the PUSCH correspond to the Msg1 and the Msg3 in the 4-step RACH. A candidate PUSCH sending occasion is configured by a higher layer. In addition, a PUSCH sending occasion selected by the terminal device is associated with RACH resource selection, and a parameter for sending a PUSCH on the sending occasion by the terminal device is also configured by a higher layer.

(2) Receive a message B (message B, MsgB).

There are two cases. If the network device successfully receives the RACH and the PUSCH that are sent by the terminal device, the network device sends a Msg4 to the terminal device. The Msg4 carries a contention resolution identifier. In this case, the random access procedure ends. Otherwise, if the network device successfully receives the RACH but fails to receive the PUSCH, the network device sends a fallback indication (fallback indication) to the terminal device. The fallback indication herein is equivalent to the Msg2 in the 4-step RACH. Then the terminal device falls back to the 4-step RACH to send a Msg3 and receive a Msg4.

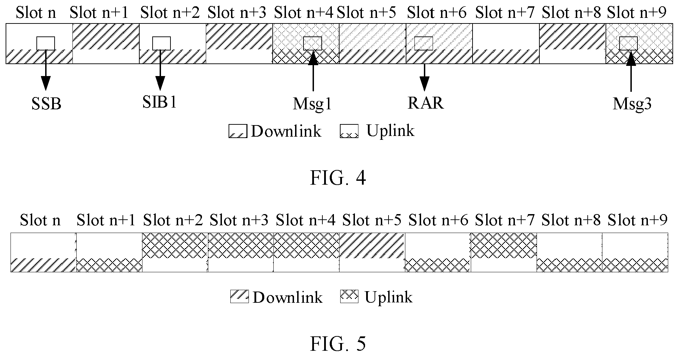

For a TDD system, in an initial access procedure of existing NR, an SSB and an SIB1 are sent on downlink symbols, ACKs/NACKs of a Msg1, a Msg3, and a Msg4 are sent on uplink symbols, a Msg2 and the Msg4 are sent on downlink symbols. For a DL-dominant configuration, each time of uplink-downlink conversion introduces a relatively large waiting delay. As shown in FIG. 4, after receiving an SIB 1, the terminal device needs to wait for more than 1 slot to send a Msg1, and after receiving an RAR, the terminal device further needs to wait for more than 2 slots to receive a Msg3. These waiting delays increase an initial access delay in switching from the idle mode to the connected mode by the terminal device.

Existing NR further supports SUL-based random access. If the terminal device selects an SUL to perform random access, a waiting delay of uplink transmission can be reduced to some extent, but the following problems exist: Not all bands have associated SUL carriers. Therefore, SUL-based random access is not a universal solution. The SUL carrier is of an uplink-only frame structure. Therefore, the SUL carrier cannot complement a normal TDD frame structure. Consequently, the DL waiting delay cannot be reduced. For a DL-dominant frame structure, a DL waiting delay is approximately 1 ms to 1.5 ms, but for another frame structure, a DL waiting delay is relatively large. Currently, there is a legacy (legacy) terminal device on the SUL carrier, and bandwidth may be limited. Therefore, there is a relatively high probability of collision during random access.

In addition, for the DL-dominant frame structure, there are sufficient DL symbols for sending SSBs, and therefore, it can be ensured that the network device can send sufficient SSBs to complete downlink beam scanning, to be specific, the SSBs are sequentially sent at different time domain locations by using different transmit beams, to ensure that UE in different directions can obtain relatively large received signal power. For a UL-dominant slot structure shown in FIG. 5, the network device does not have sufficient DL symbols in one uplink-downlink switching period to complete SSB beam scanning. Consequently, some terminals may fail to obtain SSBs through detection. If SSB scanning is extended to a next uplink-downlink switching period or a period after the next uplink-downlink switching period, an SSB detection delay is relatively large.

In addition, even if an SUL is configured, only one of the SUL carrier or an NUL uplink carrier can be used in an initial access phase as configured, in other words, dynamic switching between the SUL and the NUL is not supported. Therefore, flexibility is insufficient.

To reduce a delay in a random access process, this application provides an initial access method based on two frequency domain resources. Further, the random access method supports dynamic frequency domain resource selection and switching. Two frequency domain resources with different uplink-downlink configurations or even complementary uplink-downlink configurations are configured, and a network device and a terminal device are allowed to flexibly select a frequency domain resource to perform uplink and downlink transmission, so that a waiting delay in each information transmission phase in the initial access process is reduced.

In this application, the network device sends an SSB to the terminal device. The terminal device performs downlink synchronization by detecting the SSB. Then the terminal device receives an SIB1 based on an indication of the SSB, to obtain basic information of a cell, for example, two frequency domain resources that have different uplink-downlink configurations and that are included in the cell, and an active SSB resource set and a RACH resource set of the two frequency domain resources. Then the terminal device obtains an association relationship between an SSB and a RACH resource, selects a first SSB resource from the active SSB resource set based on measured SSB received signal power strength, to determine a first RACH resource subset corresponding to the first SSB resource, and selects a RACH resource from the first RACH resource subset to initiate random access. RACH resources associated with the first SSB resource may include RACH resources on a first frequency domain resource and a second frequency domain resource. Therefore, the terminal device may select a closest uplink symbol from the two frequency domain resources to initiate random access, so that a random access waiting delay is reduced. In embodiments of this application, the first frequency domain resource and the second frequency domain resource may be two carriers or two BWPs.

Further, the network device sends the second DCI to the terminal device to schedule a random access response RAR. The second DCI may be sent on a downlink symbol of the first frequency domain resource, the second frequency domain resource, or the first frequency domain resource and the second frequency domain resource. Therefore, a sending waiting delay is reduced. In addition, the RAR indicates, to the terminal device, a frequency domain resource on which a Msg3 is to be sent, and the network device may select a closest frequency domain resource that has an uplink symbol to carry the Msg3, so that a waiting delay of the terminal device is reduced. Then the network device sends third DCI to the terminal device to schedule a Msg4. Similar to the second DCI, the third DCI may also be sent on a downlink symbol of the first frequency domain resource, the second frequency domain resource, or the first frequency domain resource and the second frequency domain resource. Therefore, a sending waiting delay is reduced. The third DCI further indicates a frequency domain resource on which feedback information carrying the Msg4 is to be sent, and the network device may select a closest uplink symbol in time to carry the feedback information, so that a waiting delay of the terminal device is reduced.

Without loss of generality, in this application, downlink common signal transmission in an initial access phase has two phases. The first phase corresponds to first-type downlink common signals, and the second phase corresponds to second-type downlink common signals. In a possible implementation, the first-type downlink common signals include one or more downlink common signals, and any one of the downlink common signals includes a synchronization signal (synchronization signal, SS) and a first broadcast channel; and the second-type downlink common signals include one or more downlink common signals, and any one of the downlink common signals includes a second broadcast channel. For example, in NR, the first-type downlink common signal is an SSB, the first broadcast channel carries an MIB, and the second broadcast channel carries an SIB 1. In another possible implementation, the first-type downlink common signals include one or more downlink common signals, and any one of the downlink common signals includes an SS; and the second-type downlink common signals include one or more downlink common signals, and any one of the downlink common signals includes a third broadcast channel. For example, the third broadcast channel carries an MIB and an SIB 1. Specific forms and content of the first-type downlink common signal and the second-type downlink common signal are not limited in this application.

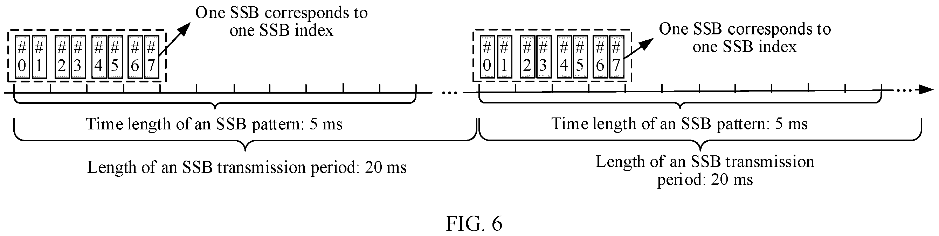

Optionally, the first-type downlink common signals are periodically transmitted. One period includes one pattern, one pattern includes one or more time-frequency locations used to transmit the first-type downlink common signal, first-type downlink common signals at different time-frequency locations form a common signal set, and one pattern specifies an index and a time-frequency resource location of each common signal in the set, in other words, common signals are in a one-to-one correspondence with indexes and time-frequency locations. For example, in an NR system, the first-type downlink common signal is an SSB, and the SSB is periodically transmitted. For example, a period is 20 ms, one period includes one SSB pattern, one pattern includes eight or more time-frequency locations for transmitting SSBs, and each time-frequency location corresponds to one SSB index. An SSB time-frequency resource included in one SSB pattern may correspond to one time unit, and a length of the time unit may be less than the SSB transmission period. For example, as shown in FIG. 6, an SSB transmission period in NR is 20 ms, but a length of a time unit corresponding to an SSB pattern is 5 ms, and corresponding time-frequency locations for transmitting SSBs all fall within 5 ms. Optionally, transmission parameters of first-type downlink common signals at different time-frequency locations in one pattern may be different. For example, sending filtering parameters or transmit beams used are different.

Similarly, the second-type downlink common signals may also be periodically transmitted, and one period may also include one pattern. In addition, receiving the second-type downlink common signal may be independent of receiving the first-type downlink common signal, in other words, have an independent period and pattern, or may be indicated based on the first-type downlink common signal. For example, a receiving location and a receiving parameter of control information for scheduling the second-type downlink common signal are determined based on an indication of the first-type downlink common signal. Alternatively, there is an association relationship, for example, a one-to-one correspondence, between receiving control information for scheduling the second-type downlink common signals and receiving the first-type downlink common signals, and a receiving location and parameter of each piece of control information for scheduling a second-type downlink common signal are determined by a corresponding first-type downlink common signal. For example, in NR, the first-type downlink common signal is an SSB, and the second-type downlink common signal is an SIB1. One SSB pattern includes a plurality of SSB indexes, and each SSB index corresponds to one time-frequency location, and is used to transmit DCI for scheduling the SIB1.

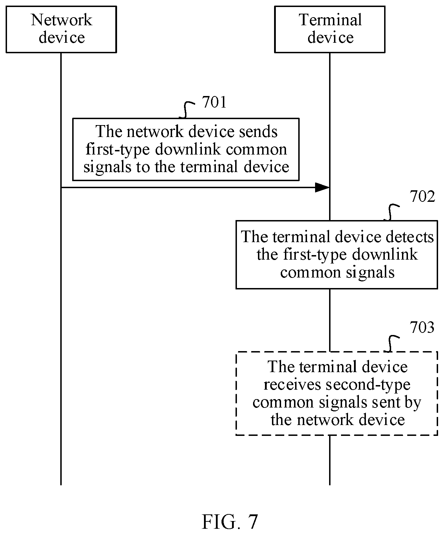

Refer to FIG. 7. An embodiment of a communication method provided in this application is applied to a process in which a terminal device accesses a network device. The method includes the following steps.

S701: The network device sends first-type downlink common signals to the terminal device. The first-type downlink common signals may include one or more common signals.

Optionally, each of the first-type downlink common signals includes a synchronization signal and a first broadcast channel. For example, the first-type downlink common signal is an SSB. Optionally, different downlink common signals in the first-type downlink common signal may be sent at different time domain locations and/or different frequency domain locations.

S702: The terminal device detects the first-type downlink common signals. Optionally, the terminal device successfully detects a first downlink common signal in the first-type downlink common signals.

Optionally, the first downlink common signal belongs to a first downlink common signal set, and the first downlink common signal set is a set of first-type downlink common signals corresponding to a first-type downlink common signal pattern (denoted as a first pattern or a pattern #1). The first pattern defines a plurality of time domain locations at which the network device can send first-type downlink common signals and indexes of first-type downlink common signals corresponding to the time domain locations in one time domain period P1 (or one time unit Q1, where Q1 is less than or equal to P1). The first-type downlink common signals at these time domain locations form the first downlink common signal set. The terminal device obtains the first downlink common signal on a first frequency domain resource through detection. Optionally, the first downlink common signal further carries first information, and the first information is used to determine a second frequency domain resource. The network device also sends a first-type downlink common signal on the second frequency domain resource. First-type downlink common signals are also periodically sent on the second frequency domain resource. A period is P2. One period includes a second downlink common signal set corresponding to one pattern (denoted as a second pattern or a pattern #2). The second pattern defines a plurality of time domain locations at which the network device can send first-type downlink common signals on the second frequency domain resource and indexes of first-type downlink common signals corresponding to the time domain locations in one time domain period P2 (or one time unit Q2, where Q2 is less than or equal to P2). The first-type downlink common signals at these time domain locations form the second downlink common signal set. The second frequency domain resource and the first frequency domain resource may correspond to two different uplink-downlink configurations, namely, different TDD frame structures. The periods P1 and P2 may be equal or unequal, and the pattern #1 and the pattern #2 may be the same or different. Optionally, the first information is used to determine an offset between the second frequency domain resource and the first frequency domain resource. According to the foregoing solution, after obtaining a first-type downlink common signal on one frequency domain resource through detection, the terminal device can quickly learn that a first-type downlink common signal also exists on the other frequency domain resource. First-type downlink common signals on different frequency domain resources may use different transmission parameters (for example, beam directions), so that the terminal device can quickly complete some parameter measurement (for example, beam measurement).

Optionally, the first downlink common signal carries second information, and the second information is used to determine the pattern of the first-type downlink common signals corresponding to the first downlink common signal, in other words, determine the pattern #1. For example, a protocol defines one or more first-type downlink common signal patterns for each band (band), each pattern corresponds to one pattern index, and each pattern corresponds to one period (or one time unit) and time domain locations at which one or more first-type downlink common signals are sent in the period (or in the time unit). Optionally, the time domain locations may be absolute time domain locations, for example, subframes, slots, or symbols on which first-type downlink common signals with different indexes are separately located. Alternatively, the time domain locations may be relative time domain locations, for example, time domain offsets of first-type downlink common signals with different indexes relative to a reference common signal (for example, a first-type downlink common signal whose index is 0), where a time domain location of the reference common signal may be obtained from other information carried in the first downlink common signal; or for another example, time domain offsets of first-type downlink common signals with different indexes relative to a start symbol of a period (or a time unit) in which the common signal pattern is located, where a time domain location of the start symbol of the period (or the time unit) in which the common signal pattern is located may be obtained from other information carried in the first downlink common signal, for example, fourth information in the following descriptions. According to the foregoing solution, the network device may select different patterns to send first-type downlink common signals, so that flexibility is improved, and uplink-downlink configurations on different frequency domain resources can be better matched. Optionally, the second information further indicates an index of the pattern (namely, the pattern #2) of the first-type downlink common signals on the second frequency domain resource. Herein, for one band, if the protocol specifies only one first-type downlink common signal pattern, the first downlink common signal may not carry the second information.

Further, the first downlink common signal further carries third information, used to determine an index of the first downlink common signal in the pattern #1. A time domain location of the first downlink common signal in a period or a time unit corresponding to the pattern #1 may be determined with reference to the definition of the pattern #1.

It should be noted that information carried in the first downlink common signal or a parameter that the first downlink common signal is used to determine may be indicated by using system information (for example, an MIB) carried in the first downlink common signal, where for example, the MIB includes a corresponding information element to directly indicate the information or determine the parameter; or may be indicated by physical layer bits carried in the first downlink common signal, where for example, the physical layer bits include a field that directly indicates the information or that is used to determine the parameter, and transport block (transport block, TB) carried on a PBCH in NR includes both an MIB from a higher layer and some physical layer information bits; or may be implicitly indicated by using sequence information included in the first downlink common signal, for example, may be implicitly indicated by using a cyclic offset of a sequence or a sequence number. The sequence herein may be a sequence corresponding to a synchronization signal or a demodulation reference signal of the PBCH.

Optionally, the terminal device completes downlink timing synchronization and/or frequency synchronization based on an index of the first downlink common signal or an index of the first downlink common signal and a definition of a pattern in which the first downlink common signal is located. For example, the terminal device completes downlink timing synchronization based on the index of the first downlink common signal, a time domain location corresponding to each index specified in the pattern #1, and a detection moment of the first downlink common signal.

Optionally, if the terminal device remains in a camping state after obtaining the first downlink common signal through detection, the following operation S703 does not need to be performed. Optionally, after obtaining the first downlink common signal through detection, the terminal device further receives a second-type downlink common signal to obtain more system parameters before remaining in a camping state or performing access to a cell.

S703: The terminal device receives second-type downlink common signals sent by the network device.

Optionally, the second-type downlink common signals include one or more common signals.

Optionally, the terminal device determines a transmission parameter of a second downlink common signal based on the first downlink common signal. The second downlink common signal belongs to the second-type downlink common signals. For example, the terminal device determines, based on the first downlink common signal, a time-frequency location of the second downlink common signal or a time-frequency location of downlink control information for scheduling transmission of the second downlink common signal, and detects and decodes the downlink control information to obtain the transmission parameter of the second downlink common signal.

Optionally, the second downlink common signal carries downlink paging configuration information and uplink random access configuration information. The terminal device may choose to remain in the camping state and listen to downlink paging to ensure that the terminal device can be woken up, or choose to initiate uplink random access, complete cell access, and enter a connected mode.

According to the foregoing solution, after obtaining a first-type downlink common signal (for example, the first downlink common signal) on one frequency domain resource through detection, the terminal device can quickly learn that a first-type downlink common signal also exists on the other frequency domain resource. First-type downlink common signals on different frequency domain resources may use different transmission parameters (for example, beam directions), so that the terminal device can quickly complete some parameter measurement (for example, beam measurement). In addition, the terminal device may choose not to perform cell access, and remain in the camping state. In this case, the terminal device may also measure first-type downlink common signals on the two frequency domain resources to complete camping-state measurement. Alternatively, the terminal device may choose to access a cell. In this case, the terminal device may perform subsequent cell access based on a first-type downlink common signal with relatively good quality in a plurality of first-type downlink common signals on the two frequency domain resources, so that a success probability of subsequent cell access is increased.

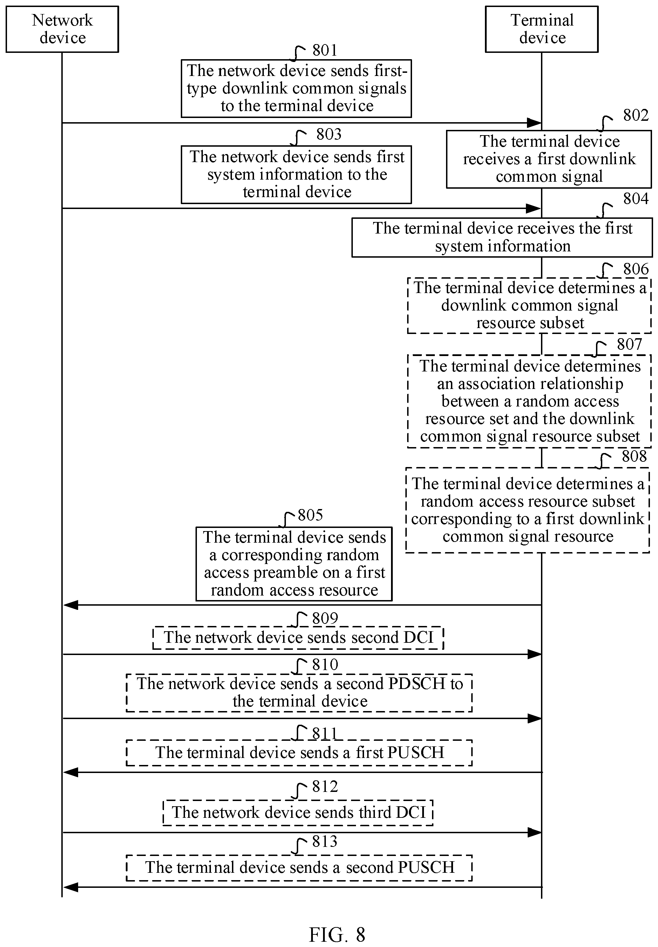

Refer to FIG. 8. An embodiment of a communication method provided in this application is applied to a process in which a terminal device accesses a network device. The method includes the following steps.

S801: The network device sends first-type downlink common signals to the terminal device.

Specifically, the first-type downlink common signals include one or more downlink common signals, the first-type downlink common signals include a first downlink common signal, and the first downlink common signal indicates a time-frequency location of control information for scheduling system information. For related descriptions of the first-type downlink common signal and the first downlink common signal, refer to the foregoing embodiment. Details are not described herein again.

S802: The terminal device receives the first downlink common signal.

Specifically, the terminal device may detect the first-type downlink common signals, and successfully detect the first downlink common signal. It should be understood that, as described above, one first-type downlink common signal corresponds to one time-frequency location for transmitting a first-type downlink common signal and one downlink common signal index. In this embodiment of this application, a downlink common signal, a downlink common signal index, and a time-frequency location of a downlink common signal may be used interchangeably on a premise that expression logic is not affected. The terminal device may obtain a receiving location of the system information based on the first downlink common signal.

Optionally, the terminal device obtains downlink timing synchronization based on the first downlink common signal. For example, the following steps may be included.

8021: The terminal device obtains, based on a band in which the first downlink common signal is located, a first-type downlink common signal pattern or candidate pattern set predefined for the band. A meaning of the first-type downlink common signal pattern is similar to meanings of the first pattern and the second pattern in the foregoing embodiment, and details are not described herein again.

8022: The terminal device determines, based on second information carried in the first downlink common signal and the predefined candidate pattern set, a pattern corresponding to transmission of the first downlink common signal, namely, a first pattern pattern #1. The second information is used to determine a pattern of the first-type downlink common signals to which the first downlink common signal belongs. For example, if N candidate patterns are predefined, and correspond to pattern indexes #0 to #(N-1), the second information indicates the foregoing pattern index.

This step is optional. For example, when each band has only one predefined candidate pattern, the first downlink common signal does not need to carry the second information.

8023: The terminal device obtains, based on fourth information carried in the first downlink common signal, a time domain location of a start symbol of a period (or a time unit) in which the first pattern corresponding to the first downlink common signal is located, where for example, the fourth information indicates a radio frame, a radio half-frame, a radio subframe, a slot, or the like in which a start symbol of the time unit corresponding to the first pattern is located.

8024: The terminal device determines an index of transmission of the first downlink common signal in the first pattern based on third information carried in the first downlink common signal, to determine, with reference to a definition of the pattern #1, the time domain location of the start symbol of the period or the time unit corresponding to the pattern #1, a number of a radio frame, a radio half-frame, a radio subframe, a slot, a symbol, or the like at a detection moment of the first downlink common signal, and then complete downlink timing synchronization based on the detection moment of the first downlink common signal.

For related descriptions of the second information and the third information, refer to the embodiment shown in FIG. 7.

In addition, the terminal device further determines a first system information transmission location based on the detected first downlink common signal. The first system information transmission location is one of one or more locations at which the network device may transmit the system information. The system information may be one of second-type downlink common signals. In an implementation, the system information may be an SIB1. In an implementation, first system information is carried on a PDSCH, and the first downlink common signal carries indication information of a frequency domain location and a time domain location of the PDSCH. In another implementation, first system information is carried on a PDSCH, and a time-frequency location and a transmission parameter of the PDSCH are indicated by using first DCI. The first downlink common signal carries indication information of a frequency domain location and a time domain location of the first DCI. The terminal device obtains, based on the first downlink common signal, the DCI for receiving and scheduling the first system information transmission location at the frequency domain location and the time domain location, to obtain a frequency domain location and a time domain location of the PDSCH carrying the first system information, namely, the first system information transmission location.

S803: The network device sends the first system information to the terminal device.

The first system information carries information indicating at least two frequency domain resources. Without loss of generality, two frequency domain resources (a first frequency domain resource and a second frequency domain resource) are used as an example for description herein. The first frequency domain resource and the second frequency domain resource may be two carriers, two bandwidth parts, or two other frequency units.

The first system information carries information indicating the first frequency domain resource and the second frequency domain resource. The first frequency domain resource and the second frequency domain resource correspond to different uplink-downlink configurations. The first frequency domain resource and the second frequency domain resource may include one downlink carrier and one uplink carrier, or include one uplink BWP and one downlink BWP.

In an implementation, the uplink-downlink configuration refers to a quantity and locations of downlink symbols, uplink symbols, and flexible symbols corresponding to a frequency domain resource. The downlink symbol is used for downlink transmission, the uplink symbol is used for uplink transmission, and the flexible symbol is used for uplink-downlink conversion or is a symbol on which a transmission direction is not limited. It should be understood that one or two of quantities of uplink symbols, downlink symbols, and flexible symbols corresponding to the frequency domain resource may be 0. For example, the uplink-downlink configuration may be represented as {xD: yS: zU}, to be specific, there are x consecutive downlink symbols, y consecutive flexible symbols, and z consecutive uplink symbols in order, where x, y, and z are integers greater than or equal to 0.

That the first frequency domain resource and the second frequency domain resource have different uplink-downlink configurations means that quantities or locations of at least one of uplink symbols, flexible symbols, and downlink symbols corresponding to the first frequency domain resource and the second frequency domain resource are different.

The first frequency domain resource and the second frequency domain resource in this application may be replaced with a first cell and a second cell; or may be replaced with a first carrier and a second carrier; or may be replaced with a first BWP and a second BWP. In this application, unless otherwise specified, a carrier, a cell, and a BWP may be used interchangeably.

In an implementation, the first frequency domain resource includes one downlink carrier DL carrier and one uplink carrier UL carrier, and the second frequency domain resource includes one downlink carrier and one uplink carrier. Optionally, center frequencies of a downlink carrier and an uplink carrier included in a frequency domain resource are aligned, but widths of the downlink carrier and the uplink carrier may be different. Herein, the carrier may alternatively be another frequency unit, for example, a bandwidth part.

The network device may send a downlink signal on either of the two DL carriers corresponding to the two frequency domain resources, and the terminal device may also send an uplink signal on either of the two UL carriers corresponding to the two frequency domain resources. In other words, the carriers corresponding to the first frequency domain resource and the carriers corresponding to the second frequency domain resource may all be in an active mode in an initial access process. However, it does not mean that the network device and the terminal device can send/receive information on two carriers at the same time, and it only means that the network device and the terminal device are not limited to always sending/receiving information on only one carrier.

Optionally, the two frequency domain resources have the following characteristic: The network device and the terminal device can quickly perform switching between two DL carriers or two UL carriers, and dynamically, quickly, and flexibly select one carrier to send/receive information. For example, the two DL carriers do not overlap, or the two DL carriers have a same subcarrier spacing, or the two DL carriers have same bandwidth. Similarly, the two UL carriers do not overlap, or the two UL carriers have a same subcarrier spacing, or the two UL carriers have same bandwidth.

S804: The terminal device receives the first system information.

Optionally, the terminal device receives the first system information based on the detected first downlink common signal. Specifically, the terminal device determines, based on the first downlink common signal, a time-frequency location of control information for scheduling the first system information, receives the control information at the time-frequency location of the control information, where the control information indicates a receiving location of the first system information, and then receives the first system information at the location.

Further, the terminal device determines the first frequency domain resource and the second frequency domain resource based on the first system information. For example, the terminal device obtains the first frequency domain resource and a corresponding uplink-downlink configuration based on information carried in the first system information, and obtains the second frequency domain resource and a corresponding uplink-downlink configuration.

In an implementation, the first downlink common signal is an SSB, and the first system information is an SIB1.

S805: The terminal device sends, on a first random access resource in a random access resource set, a random access preamble corresponding to the first random access resource.

Optionally, the random access resource set includes a random access resource on the first frequency domain resource and/or a random access resource on the second frequency domain resource.

The random access resource set is a set of random access resources. A random access resource refers to a random access preamble on a random access occasion (or a random access time-frequency resource). For details, refer to the foregoing related description.

Optionally, the terminal device determines the random access resource set. For example, the terminal device determines the random access resource set based on RACH configuration information carried in the first system information. The RACH configuration information includes time domain location information, frequency domain location information, and code domain configuration information of a RACH occasion. The code domain configuration information indicates a quantity of RACH preambles that can be sent at a time-frequency location (or a RACH occasion) and specific sequence information of each preamble. The frequency domain location information indicates a quantity of RACH occasions at a same time domain location in a frequency domain resource and a frequency domain location of each RACH occasion. The time domain location information indicates a configuration period of a RACH occasion, a quantity of RACH occasions in the period, and a relative time domain location of each occasion in the period.

In a possible implementation, there are random access resources on both the first frequency domain resource and the second frequency domain resource, and the random access resources on the first frequency domain resource and the second frequency domain resource jointly form the random access resource set. RACH occasions on each of the first frequency domain resource and the second frequency domain resource may be independently counted, or RACH occasions on the first frequency domain resource and the second frequency domain resource may be jointly counted. Correspondingly, the terminal device receives first random access configuration information and second random access configuration information in the first system information. The first random access configuration information is used to determine the random access resource on the first frequency domain resource, and the second random access configuration information is used to determine the random access resource on the second frequency domain resource. The first random access configuration information and the second random access configuration information are similar to the random access configuration information. For example, the first random access configuration information and the second random access configuration information each include time domain location information, frequency domain location information, and code domain configuration information of a RACH occasion.

In another possible implementation, there are random access resources on only one of the two frequency domain resources. For example, there are random access resources only on the first frequency domain resource, and the random access resources on the first frequency domain resource form the random access resource set. Correspondingly, the terminal device receives first random access configuration information in the first system information, and determines the RACH resources on the first frequency domain resource. For example, the first random access configuration information includes time domain location information, frequency domain location information, and code domain configuration information of a RACH occasion. Specific meanings are the same as those described above, and details are not described herein again.

In a possible implementation, the random access resource set includes only active random access resources, and the active random access resource means that a time domain location of the random access resource corresponds to an uplink symbol or a flexible symbol and/or the random access resource does not overlap any downlink common signal or any active downlink common signal in time domain. Before determining the random access resource set, the terminal device first selects an active random access resource from random access resources on the first frequency domain resource and/or the second frequency domain resource. In another possible implementation, the random access resource set includes an active random access resource and an inactive random access resource. The inactive random access resource means that a time domain location of the random access resource corresponds to a downlink symbol, and/or the random access resource overlaps a downlink common signal or an active downlink common signal in time domain.

In an implementation, the terminal device determines the first random access resource based on a common signal index corresponding to the detected first downlink common signal. It should be understood that the first downlink common signal herein is a first-type downlink common signal detected by the terminal device, and may be a first-type downlink common signal first detected by the terminal device, a first-type downlink common signal having maximum received signal power in one or more detected first-type downlink common signals, or a first detected first-type downlink common signal in a downlink common signal subset. The downlink common signal subset includes one or more first-type downlink common signals that are detected by the terminal device and whose receive power is greater than or equal to a first threshold, and the first threshold may be indicated by a first-type downlink common signal.

For example, the first downlink common signal is a first SSB, and the system information is an SIB 1. Selecting the first random access resource from the random access resource set includes: The terminal device determines a RACH resource subset based on a first SSB resource and an association relationship between an SSB resource and a RACH resource. The random access resource subset is a subset of the random access resource set. Optionally, the RACH resource subset includes RACH resources on the first frequency domain resource and the second frequency domain resource.

Optionally, if the RACH resource set includes only active RACH resources, the RACH resource subset may include RACH resources on only one frequency domain resource. Optionally, if an inactive RACH resource is not removed from the RACH resource set, the terminal device needs to remove the inactive RACH resource from the RACH resource subset. The inactive RACH resource is not an active RACH resource, and a definition of the active RACH resource is the same as that described above.

Optionally, the terminal device selects an earliest RACH resource in time domain from the RACH resource subset, and if there are a plurality of same RACH resources in time domain, for example, a plurality of RACH occasions with different frequency domain locations, randomly selects a RACH occasion, or randomly selects a RACH sequence when one RACH occasion includes a plurality of RACH sequences.

Optionally, a spatial filtering setting used by the terminal device to send the first RACH preamble on a first RACH occasion is the same as a spatial filtering setting used by the terminal device to receive the first SSB resource.

Correspondingly, the network device receives, on the first random access resource, the random access preamble corresponding to the first random access resource.

The network device detects a random access preamble on each random access resource in a first random access resource subset, and the network device obtains a random access preamble on the first random access resource through detection.

In this embodiment, in an initial access process, the random access resource set of the terminal device includes random access sets separately located on at least two frequency domain resources. Because the at least two frequency domain resources correspond to different uplink-downlink configurations, the terminal device may flexibly select, based on the uplink-downlink configurations, a suitable random access resource from the random access resources corresponding to the at least two frequency domain resources to perform random access, so that a waiting delay in sending the random access preamble can be reduced, thereby reducing an access delay and improving system flexibility.

Optionally, the method further includes the following steps.

S806: The terminal device determines a downlink common signal resource subset, where the downlink common signal resource subset includes a downlink common signal resource on the first frequency domain resource and/or a downlink common signal resource on the second frequency domain resource.

The downlink common signal resource subset may also be referred to as an active downlink common signal set. An active downlink common signal is an actually sent downlink common signal. The downlink common signal resource subset is a subset of a downlink common signal resource set.

In an implementation, the downlink common signal resource subset includes a downlink common signal on the first frequency domain resource and a downlink common signal on the second frequency domain resource. For example, the downlink common signal resource subset includes a first downlink common signal resource subset and a second downlink common signal resource subset, a resource in the first downlink common signal resource subset is located on the first frequency domain resource, and a resource in the second downlink common signal resource subset is located on the second frequency domain resource. The first downlink common signal resource subset is a subset of a first downlink common signal resource set (referred to as a first set). The first set includes one or more common signals corresponding to a first downlink common signal pattern (for example, the pattern #1). The first downlink common signal pattern indicates one or more downlink common signals on the first frequency domain resource, indexes of the downlink common signals, and time-frequency locations of the downlink common signals on the first frequency domain resource in one period (or one time unit). Correspondingly, an index, in the first downlink common signal set, of a downlink common signal included in the first subset is indicated by first indication information. The second downlink common signal resource subset is a subset of a second downlink common signal resource set (referred to as a second set). The second set includes one or more downlink common signals corresponding to a second downlink common signal pattern (for example, a pattern #2). The second downlink common signal pattern indicates one or more downlink common signals on the second frequency domain resource, indexes of the downlink common signals, and time-frequency locations of the downlink common signals on the second frequency domain resource in one period (or one time unit). Correspondingly, an index, in the second downlink common signal set, of a downlink common signal included in the second subset is indicated by second indication information. The first downlink common signal pattern may be the same as or different from the second downlink common signal pattern. Optionally, the first indication information includes a bitmap (bitmap), each bit bit in the bitmap corresponds to one downlink common signal in the first set, and a value of the bit indicates whether the corresponding downlink common signal belongs to the first downlink common signal resource subset. Optionally, the second indication information includes a bitmap, each bit in the bitmap corresponds to one downlink common signal in the second set, and a value of the bit indicates whether the corresponding downlink common signal belongs to the second downlink common signal resource subset.

That the terminal device determines a downlink common signal resource subset includes:

The terminal device receives the first indication information and the second indication information, and determines the first downlink common signal resource subset based on the first indication information.

The first indication information and the second indication information are sent by the network device to the terminal device. In an implementation, the first indication information and the second indication information are carried in the first system information.

In this implementation, two pieces of indication information are used to separately indicate downlink common signal resources on the first frequency domain resource and the second frequency domain resource, to match parameters such as frame structures and subcarrier spacings of the two frequency domain resources, thereby improving indication efficiency.

In another implementation, the downlink common signal resource subset includes only downlink common signals on the first frequency domain resource or the second frequency domain resource. Correspondingly, the downlink common signal resource set includes only a first set or a second set. Correspondingly, an index, in a first downlink common signal pattern or a second downlink common signal pattern, of the downlink common signal included in the downlink common signal resource subset is indicated by first indication information or second indication information.

In an implementation, the downlink common signal resource subset includes a downlink common signal on the first frequency domain resource and a downlink common signal on the second frequency domain resource. The downlink common signal resource subset is equal to a third downlink common signal resource subset, and the third downlink common signal resource subset is a subset of a third downlink common signal resource set (referred to as a third set). The third set includes one or more downlink common signals corresponding to a third downlink common signal pattern (for example, a pattern #3), and the third downlink common signal pattern indicates one or more downlink common signals on the first frequency domain resource and the second frequency domain resource, indexes of the downlink common signals, and time-frequency locations of the downlink common signals on the first frequency domain resource or the second frequency domain resource in one period (or one time unit). Correspondingly, an index, in the third downlink common signal set, of the downlink common signal included in the third downlink common signal resource subset is indicated by third indication information.

That the terminal device determines a downlink common signal resource subset includes:

The terminal device receives the third indication information, and determines the third downlink common signal resource subset based on the third indication information. The downlink common signal resource subset is equal to the third downlink common signal resource subset.

The third indication information is sent by the network device to the terminal device. In an implementation, the third indication information is carried in the first system information.

Optionally, the method further includes:

The terminal device receives downlink common signal pattern indication information. The downlink common signal pattern indication information indicates an index of the third downlink common signal pattern, to indicate a time domain location of each downlink common signal in the third downlink common signal set on the first frequency domain resource or the second frequency domain resource. Optionally, a plurality of downlink common signal patterns are predefined for each band, each downlink common signal pattern corresponds to one index, and the third downlink common signal pattern is determined by obtaining the index of the third downlink common signal pattern. The downlink common signal pattern indication information may be carried in each first-type downlink common signal.

In this implementation, one pattern is used to jointly indicate a set of downlink common signal resources on the first frequency domain resource and the second frequency domain resource, and then one piece of indication information indicates an index that is in the set and that corresponds to a common signal belonging to the downlink common signal resource subset, so that configuration flexibility can be improved.

S807: The terminal device determines an association relationship between the random access resource set and the downlink common signal resource subset, where the association relationship includes a correspondence between a downlink common signal resource in the downlink common signal resource subset and a resource subset in the random access resource set.

The random access resource set may include only active random access resources, or may include an active random access resource and an inactive random access resource.

In an embodiment, the downlink common signal resource subset includes the first downlink common signal resource subset and the second downlink common signal resource subset, a resource in the first downlink common signal resource subset is located on the first frequency domain resource, and a resource in the second downlink common signal resource subset is located on the second frequency domain resource.

The association relationship includes at least one of a first association relationship, a second association relationship, a third association relationship, or a fourth association relationship, the first association relationship indicates an association relationship between a random access resource on the first frequency domain resource and the first downlink common signal resource subset, the second association relationship indicates an association relationship between a random access resource set on the second frequency domain resource and the first downlink common signal resource subset, the third association relationship indicates an association relationship between the random access resource set on the first frequency domain resource and the second downlink common signal resource subset, and the fourth association relationship indicates an association relationship between the random access resource set on the second frequency domain resource and the second downlink common signal resource subset.

Alternatively, the association relationship may include at least one of a first association relationship, a second association relationship, a third association relationship, a fourth association relationship, a fifth association relationship, a sixth association relationship, a seventh association relationship, an eighth association relationship, or a ninth association relationship. The fifth association relationship indicates an association relationship between random access resources in two frequency domains and resources in the first downlink common signal resource subset. Random access resources in a first frequency domain and random access resources in a second frequency domain are jointly counted. The sixth association relationship indicates an association relationship between random access resources in the two frequency domains and resources in the second downlink common signal resource subset. Random access resources in the first frequency domain and random access resources in the second frequency domain are jointly counted. The seventh association relationship indicates an association relationship between random access resources on the first frequency domain resource and active common signal resources in the downlink common signal resource subset. The downlink common signal resource subset is the third downlink common signal resource subset. The eighth association relationship indicates an association relationship between random access resources on the second frequency domain resource and active common signal resources in the first downlink common signal resource set. The downlink common signal resource subset is the third downlink common signal resource subset. The ninth association relationship indicates an association relationship between random access resources in the two frequency domains and active common signal resources in the first downlink common signal resource set. Random access resources in the first frequency domain and random access resources in the second frequency domain are jointly counted, and the downlink common signal resource subset is the third downlink common signal resource subset. Downlink common signals in the third downlink common signal resource subset are jointly counted on the first frequency domain resource and the second frequency domain resource, and a corresponding index is indicated by the third downlink common signal pattern.

S808: The terminal device determines, based on the association relationship, a random access resource subset corresponding to a first downlink common signal resource, where the first downlink common signal resource is a resource in the downlink common signal resource subset, all random access resources in the random access resource subset belong to the random access resource set, and the random access resource subset includes the first random access resource.

Optionally, the method further includes:
S807': The terminal device determines an association relationship between the random access resource set and the downlink common signal resource set, where the association relationship includes a correspondence between a downlink common signal resource in the downlink common signal resource set and a resource subset in the random access resource set.

To be specific, the terminal device may determine at least one of the following: an association relationship between the random access resource set and the downlink common signal resource set, an association relationship between the active random access resource set and the downlink common signal resource set, and an association relationship between the random access resource set and the downlink common signal resource subset, or an association relationship between the active random access resource set and the downlink common signal resource subset.

Step S807' and step S807 may be replaced with each other. In other words, the terminal device may first determine the active downlink common signal resource set from the downlink common signal resource set, and then determine an association relationship between the active downlink common signal resource set and the random access resource set. Alternatively, the terminal device may determine the active random access resource set from the random access resource set, and then determine the association relationship between the downlink common signal resource set and the active random access resource set. Alternatively, the terminal device may first determine the active downlink common signal resource set from the downlink common signal resource set, determine the active random access resource set from the random access resource set, and then determine an association relationship between the active downlink common signal resource set and the active random access resource set. Alternatively, the terminal device may directly determine the association relationship between the downlink common signal resource set and the random access resource set, and when subsequently selecting a common signal and/or a random access resource for transmission, determines whether the common signal or the resource is active.

For example, the first downlink common signal is an SSB, and the first system information is an SIB1. The downlink common signal resource subset may be determined in any one of the following manners:

Manner 1:

When there is an SSB on only one of the first frequency domain resource and the second frequency domain resource, for example, there is a common signal only on the first frequency domain resource, the terminal device obtains first indication information from the SIB 1. The first indication information indicates at least one active downlink common signal index in the first downlink common signal pattern on the first frequency domain resource, and downlink common signals corresponding to the active downlink common signal index form the active downlink common signal resource set, namely, the downlink common signal resource subset. The first frequency domain resource is a frequency domain resource on which the first downlink common signal is detected in the foregoing steps.

For example, there is an SSB resource only on the first frequency domain resource, as shown in the following FIG. (a). The first frequency domain resource corresponds to a frequency domain resource on which SSB transmission detected by the terminal device in the foregoing step is located. Correspondingly, the terminal device obtains the first indication information from the SIB1. The first indication information indicates whether SSB transmission exists on SSB resources corresponding to a plurality of SSB indexes in one SSB pattern on the first frequency domain resource, in other words, whether each SSB index is active. SSB resources corresponding to all active SSB indexes form the active SSB resource set. Optionally, the SSB resources corresponding to the active SSB indexes are sorted in ascending order of the indexes in the active SSB resource set.

Manner 2:

When there are SSB resources on both the first frequency domain resource and the second frequency domain resource, and an SSB on each frequency domain resource is separately indicated, the terminal device obtains first indication information and second indication information from the SIB1, determines a first active SSB resource subset based on the first indication information, where an SSB in the first active SSB resource subset belongs to the first frequency domain resource, and determines a second SSB resource subset based on the second indication information, where an SSB in the second SSB resource subset belongs to the second frequency domain resource, and the active downlink common signal resource set (namely, the downlink common signal resource subset) is a union set of the first active SSB resource subset and the second active SSB resource subset.

Optionally, there are SSB resources on both the first frequency domain resource and the second frequency domain resource, and SSB resources on each frequency domain resource independently form one SSB pattern, as shown in the following FIG. (b). Correspondingly, the terminal device obtains the first indication information and the second indication information from the SIB 1. The first indication information indicates whether SSB transmission really exists on SSB resources corresponding to a plurality of SSB indexes in one SSB pattern on the first frequency domain resource, in other words, whether each SSB index is active, and the second indication information indicates whether SSB transmission really exists on SSB resources corresponding to a plurality of SSB indexes in one SSB pattern on the second frequency domain resource, in other words, whether each SSB index is active. Finally, SSB resources corresponding to all active SSB indexes on the first frequency domain resource and SSB resources corresponding to all active SSB indexes on the second frequency domain resource form the active SSB resource set.

Manner 3:

When there are common signals on both the first frequency domain resource and the second frequency domain resource, and the common signals on the two frequency domain resources are indicated by using a same piece of indication information, the terminal device obtains third indication information from the system information SIB1, and determines the downlink common signal resource subset, namely, the downlink common signal resource subset, based on the third indication information. The downlink common signal resource subset is a subset of the third downlink common signal resource set corresponding to the third downlink common signal pattern, and an SSB resource set corresponding to the third downlink common signal pattern includes an SSB resource on the first frequency domain resource and an SSB resource on the second frequency domain resource.

Optionally, there are SSB resources on both the first frequency domain resource and the second frequency domain resource, and the SSB resources on the two frequency domain resources jointly form one SSB pattern, as shown in the following FIG. (c). Correspondingly, the terminal device obtains the third indication information from the SIB 1. The third indication information indicates whether SSB transmission really exists on SSB resources corresponding to a plurality of SSB indexes in one SSB pattern on the first frequency domain resource and the second frequency domain resource, in other words, whether each SSB index is active, and SSB resources corresponding to an active SSB index in the last SSB pattern form the active SSB resource set. Optionally, the SSB resources corresponding to the active SSB indexes are sorted in ascending order of the indexes in the SSB resource set.

Optionally, in an example in which the first downlink common signal is an SSB, and the first system information is an SIB1, the association relationship between an SSB resource and a RACH resource in step S807 or S807' may be one of the following association relationships:

First: If there are SSB resources only on the first frequency domain resource, and there are RACH resources only on the first frequency domain resource, the association relationship is a first association relationship, that is, an association relationship between a RACH resource in the first frequency domain and an SSB resource in the first frequency domain.

The association relationship between an SSB resource and a RACH resource includes a plurality of sub-association relationships, and each sub-association relationship includes SSB resources corresponding to one active SSB index and one RACH preamble set on one RACH occasion, or all RACH preamble sets on one RACH occasion, or a plurality of RACH preamble sets on a plurality of RACH occasions.

The RACH occasion may be identified by using a RACH occasion index. The RACH occasion index is a manner of counting RACH occasions on the first frequency domain resource. Optionally, a manner of counting RACH occasions on a frequency domain resource includes the following: (1) Frequency-first-time-second manner is used: RACH occasions at different frequency domain locations and one time domain location are first sorted in ascending order of the frequency domain locations, and then RACH occasions at different time domain locations are sorted in a time sequence. (2) Time-first-frequency-second manner is used: RACH occasions at different time domain locations and one frequency domain location are first sorted in a time sequence, and then RACH occasions at different frequency domain locations are sorted in ascending order of the frequency domain locations. (3) A time-first-frequency-second manner is first used for one second time unit, and then second time units are sorted in a time sequence. For example, if the second time unit is a slot, RACH occasions at a plurality of frequency domain locations and a plurality of time domain locations in one slot are sorted in a time-first-frequency-second manner, and then RACH occasions in different slots are sorted in ascending order of slot indexes.

A RACH preamble on a RACH occasion may be identified by using a preamble index.

Second: If there are SSB resources only on the first frequency domain resource, there are RACH resources on the two frequency domain resources, and RACH occasions on each of the two frequency domain resources are independently counted, the association relationship includes a first association relationship and a second association relationship. The second association relationship indicates an association relationship between a RACH resource in the second frequency domain and an SSB resource in the first frequency domain.

Third: If there are SSB resources only on the first frequency domain resource, there are RACH resources on the two frequency domain resources, and RACH occasions on the two frequency domain resources are jointly counted, the association relationship is a fifth association relationship. The fifth association relationship indicates an association relationship between an SSB resource on the first frequency domain resource, the RACH occasions that are jointly counted on the two frequency domain resources, and a RACH preamble on each RACH occasion.

Optionally, a method for jointly counting the RACH occasions on the two frequency domain resources includes the following: (1) Frequency-first-time-second manner: RACH occasions at different frequency domain locations on the two frequency domain resources and one time domain location are first sorted in ascending order of the frequency domain locations, and then RACH occasions at different time domain locations are sorted in a time sequence. (2) Time-first-frequency-second manner: RACH occasions at different time domain locations and one frequency domain location are first sorted in a time sequence, and then RACH occasions at different frequency domain locations are sorted in ascending order of the frequency domain locations. (3) A time-first-frequency-second manner is first used for one second time unit, and then second time units are sorted in a time sequence. For example, if the second time unit is a slot, RACH occasions at a plurality of frequency domain locations and a plurality of time domain locations in one slot are sorted in a time-first-frequency-second manner, and then RACH occasions in different slots are sorted in ascending order of slot indexes. (4) RACH occasions on the first frequency domain resource are first counted and then RACH occasions on the second frequency domain resource are counted. RACH occasions on each frequency domain resource may be counted in a frequency-first-time-second manner, a time-first-frequency-second manner, or a combination thereof.

Optionally, during counting of RACH occasions, all RACH occasions configured in the SIB 1 are counted, or active RACH occasions configured in the SIB 1 are counted. For the active RACH occasion, a frequency domain location of the RACH occasion is located on the first frequency domain resource or the second frequency domain resource, and a time domain location of the RACH occasion corresponds to an uplink symbol or a flexible symbol on a frequency domain resource on which the RACH occasion is located.

Fourth: If there are SSB resources on the two frequency domain resources, SSB resources on each frequency domain resource form an independent SSB pattern, and there are RACH resources only on the first frequency domain resource, the association relationship includes a first association relationship and a third association relationship.

Fifth: If there are SSB resources on the two frequency domain resources, SSB resources on each frequency domain resource form an independent SSB pattern, there are RACH resources on the two frequency domain resources, and RACH occasions on each of the two frequency domain resources are independently counted, the association relationship includes a first association relationship, a second association relationship, a third association relationship, and a fourth association relationship.

Sixth: If there are SSB resources on the two frequency domain resources, SSB resources on each frequency domain resource form an independent SSB pattern, there are RACH resources on the two frequency domain resources, and RACH occasions on the two frequency domain resources are jointly counted, the association relationship includes a fifth association relationship and a six association relationship. The sixth association relationship indicates an association relationship between an SSB resource on the second frequency domain resource, the RACH occasions that are jointly counted on the two frequency domain resources, and a RACH preamble on each RACH occasion.

Seventh: If there are SSB resources on the two frequency domain resources, the SSB resources on the two frequency domain resources form one SSB pattern, and there are RACH resources only on the first frequency domain resource, the association relationship includes a seventh association relationship. The seventh association relationship indicates an association relationship between each active SSB resource in the joint SSB pattern on the two frequency domain resources and a RACH resource on the first frequency domain resource. A location and an index count of each SSB resource in one SSB pattern are determined by the SSB pattern.

Eighth: If there are SSB resources on the two frequency domain resources, the SSB resources on the two frequency domain resources jointly form one SSB pattern, there are RACH resources on the two frequency domain resources, and RACH occasions on each of the two frequency domain resources are independently counted, the association relationship includes a seventh association relationship and an eighth association relationship. The eighth association relationship indicates an association relationship between each active SSB resource in the joint SSB pattern on the two frequency domain resources and a RACH resource on the second frequency domain resource.

Ninth: If there are SSB resources on the two frequency domain resources, the SSB resources on the two frequency domain resources jointly form one SSB pattern, there are RACH resources on the two frequency domain resources, and RACH occasions on the two frequency domain resources are jointly counted, the association relationship includes a ninth association relationship. The ninth association relationship indicates an association relationship between each active SSB resource in the joint SSB pattern on the two frequency domain resources, the jointly counted RACH occasions, and a RACH preamble on each RACH occasion.

Optionally, the method further includes:

S809: The network device sends second downlink control information DCI at a PDCCH monitoring location in a second physical downlink control channel PDCCH monitoring location set; and/or
the network device sends second DCI at a PDCCH monitoring location in a third PDCCH monitoring location set.

The second DCI is used to schedule a second PDSCH, the second PDSCH is used to carry an RAR, the PDCCH monitoring location in the second PDCCH monitoring location set is on the first frequency domain resource and is located in a first sub-time window, the PDCCH monitoring location in the third PDCCH monitoring location set is on the second frequency domain resource and is located in a second sub-time window, and the first sub-time window and the second sub-time window are determined based on the first random access resource.

The network device sends the second DCI at one or more of the PDCCH detection locations. For example, the network device selects an earliest active monitoring location in time domain to send the second DCI, so that the terminal device quickly receives the RAR.

Correspondingly, the terminal device detects the second downlink control information DCI at the PDCCH monitoring location in the second physical downlink control channel PDCCH monitoring location set; and/or
the terminal device detects the second DCI at the PDCCH monitoring location in the third PDCCH monitoring location set.

Optionally, the terminal device directly determines a first time window. A length of the first time window is predefined or is indicated in the SIB 1, and a distance between a start location of the first time window and an end location of the first RACH resource is predefined or is indicated in the SIB 1. The terminal device detects the second DCI on the first frequency domain resource in the first time window or on the second frequency domain resource in a second time window.

In this embodiment, the network device sends the second DCI at one or more PDCCH detection locations of the first frequency domain resource or the second frequency domain resource, and therefore the network device may flexibly select a suitable resource from at least two frequency domain resources based on uplink-downlink configurations to send the second DCI for scheduling the random access response, so that a delay in sending the second DCI can be reduced, and system flexibility can be improved.

Optionally, the terminal device separately determines the first sub-time window and the second sub-time window, and detects the second DCI on the first frequency domain resource in the first sub-time window; and/or detects the second DCI on the second frequency domain resource in the second sub-time window. Without loss of generality, the following uses this case as an example for description.

Case 1: If the terminal device supports detection of the second DCI on the two frequency domain resources, to be specific, the terminal device supports detection of the second DCI at monitoring locations in the second PDCCH monitoring location set and the third PDCCH monitoring location set, the terminal device detects the second DCI at each active detection location in the second PDCCH monitoring location on the first frequency domain resource in the first sub-time window, and detects the second DCI at each active monitoring location in the third PDCCH monitoring location set on the second frequency domain resource in the second sub-time window. The active monitoring location means that a symbol on which the monitoring location is located is a downlink symbol or a flexible symbol.

Case 2: If the terminal device does not support detection of the second DCI on the two frequency domain resources, to be specific, the terminal device does not support detection of the second DCI at a monitoring location in the second PDCCH monitoring location set and an overlapping monitoring location in the third PDCCH monitoring location set, when a second monitoring location in the second PDCCH detection location set and a third monitoring location in the third PDCCH monitoring location set overlap in time domain, the terminal device determines, according to a specific rule, whether to detect the second DCI at the second monitoring location or the third monitoring location. For example, the terminal device first determines which of the second monitoring location and the third monitoring location is an active monitoring location. The active monitoring location means that a time domain symbol included in the PDCCH monitoring location is a downlink symbol (or a downlink symbol or a flexible symbol) on a corresponding frequency domain resource. A corresponding inactive monitoring location means that at least one of time domain symbols included in the PDCCH detection location is an uplink symbol or a flexible symbol (or an uplink symbol) on a corresponding frequency domain resource. The terminal device preferentially selects an active monitoring location to detect the second DCI. If both the second monitoring location and the third monitoring location are active monitoring locations, the terminal device may select a monitoring location according to the following criterion to detect the second DCI:

Manner 1: A monitoring location on a preset frequency domain resource is preferentially selected. The preset frequency domain resource may be a frequency domain resource that is predefined, is indicated by the SIB1, or directly is a frequency domain resource on which the terminal device receives the first downlink common signal in S802.

Manner 2: A monitoring location on a frequency domain resource on which a latest active PDCCH monitoring location is located is preferentially selected for detection, so that a quantity of times the terminal device switches between two frequency domain resources is reduced.

Optionally, by default, the terminal device does not support detection of the second DCI on the two frequency domain resources, and processing is performed based on Case 2. The reason is as follows: The terminal device has not completed cell access, the network device does not know a capability of the terminal device, and can consider only by default that the terminal device does not support detection of the second DCI on the two frequency domain resources, and send the second DCI based on this case. Therefore, the terminal device can detect the second DCI based on only this case.

In an embodiment, when the second monitoring location in the second PDCCH monitoring location set and the third monitoring location in the third PDCCH monitoring location set overlap in time domain, a symbol on which the second monitoring location is located is a downlink symbol or a flexible symbol, and a symbol on which the third monitoring location is located includes an uplink symbol, the second DCI is sent at the second monitoring location; or

when the second monitoring location in the second PDCCH monitoring location set and the third monitoring location in the third PDCCH monitoring location set overlap in time domain, a symbol on which the second monitoring location is located is a downlink symbol or a flexible symbol, and a symbol on which the third monitoring location is located is also a downlink symbol or a flexible symbol, the second DCI is sent at a fourth monitoring location, where the fourth monitoring location is one of the second monitoring location and the third monitoring location.

Correspondingly, the terminal device detects the second DCI at a corresponding monitoring location.

Optionally, the second DCI is scrambled by using a random access radio network temporary identifier RA-RNTI, and a value of the RA-RNTI depends on whether a frequency domain resource on which the first random access resource is located is the first frequency domain resource or the second frequency domain resource and depends on a time-frequency location of the first random access resource in the frequency domain resource on which the first random access resource is located.

Correspondingly, before detecting the second DCI, the terminal device determines the RA-RNTI, and descrambles the second DCI based on the RA-RNTI. For example, the terminal device receives a signal at a monitoring location, demodulates and decodes the signal to obtain a bit sequence, performs descrambling based on the RA-RNTI to determine a cyclic redundancy check (Cyclic redundancy check, CRC) bit, and determines, based on the CRC bit, whether the received bit sequence is correctly received and whether the received bit sequence is sent to the terminal device.

Optionally, a value of the RA-RNTI is determined based on the frequency domain resource on which the first RACH resource is located and the time-frequency location of the first RACH resource in the frequency domain resource on which the first RACH resource is located. For example, for Manner 1, Manner 4, or Manner 7, the value of the RA-RNTI is determined based on only a time-frequency location of the first RACH resource on the first frequency domain resource, or is determined based on a RACH occasion index of the first RACH resource on the first frequency domain resource. For another example, for Manner 2, Manner 5, or Manner 8, the value of the RA-RNTI is determined depending on whether the first RACH resource is on the first frequency domain resource or the second frequency domain resource, and a time-frequency location or a RACH occasion index of the first RACH resource on the frequency domain resource. In other words, a same RACH occasion index on the first frequency domain resource and the second frequency domain resource corresponds to different RA-RNTIs. For another example, for Manner 3, Manner 6, or Manner 9, the value of the RA-RNTI is related to a ranking (namely, an index) of the RACH occasion of the first RACH resource in a joint counting mode.

Optionally, after obtaining the second DCI through detection, the terminal device receives the second PDSCH on a frequency domain resource indicated by the second DCI and a time-frequency location in the frequency domain resource, and decodes the second PDSCH. Content of the second PDSCH is parsed. If a field in the second PDSCH includes a RACH preamble index sent by the terminal device, it is considered that the field is intended for the terminal device, and subsequent steps are performed.

Optionally, the method further includes the following steps.

S810: The network device sends the second PDSCH to the terminal device, where the second PDSCH includes the random access response RAR, and the RAR carries indication information of a fourth frequency domain resource.

The RAR is carried on the second PDSCH, the RAR is used to schedule a first physical uplink shared channel PUSCH, and the fourth frequency domain resource belongs to the first frequency domain resource or the second frequency domain resource.

Correspondingly, the terminal device receives the random access response RAR, and determines, based on the indication information of the fourth frequency domain resource, the fourth frequency domain resource used to send the first PUSCH.

S811: The terminal device determines an uplink timing advance TA, obtains an RAR UL grant from the RAR, and sends the first PUSCH based on the RAR UL grant.

The terminal device sends the first PUSCH on the fourth frequency domain resource.

Optionally, the terminal device determines, based on the TA indicated in the RAR, uplink timing synchronization, namely, an advance of an uplink time axis relative to a downlink time axis, or an advance of an uplink transmission moment relative to a downlink receiving moment for a same time domain symbol.

Optionally, the RAR UL grant indicates a frequency domain resource on which the first PUSCH is located, in other words, indicates whether the first PUSCH is sent on the first frequency domain resource or the second frequency domain resource. Optionally, the RAR UL grant further carries other information, for example, a time domain location, a frequency domain location, and a modulation scheme of the first PUSCH on a corresponding frequency domain resource. In this way, the network device may select, based on frame structures of the two frequency domain resources, a frequency domain resource that has a closest uplink part to send the first PUSCH, so that a delay in sending the first PUSCH is reduced.

Optionally, the terminal device sends the first PUSCH based on an indication of the RAR UL grant. The first PUSCH carries a message 3. For example, the first PUSCH carries an ID of the terminal device.

Correspondingly, the network device receives the first PUSCH on the fourth frequency domain resource.

S812: The network device sends third DCI at a PDCCH monitoring location in a fourth PDCCH monitoring location set; and/or

the network device sends third DCI at a PDCCH monitoring location in a fifth PDCCH monitoring location set.

The third DCI is used to schedule a third PDSCH. The PDCCH monitoring location in the fourth PDCCH monitoring location set is on the first frequency domain resource and is located in a third sub-time window, the PDCCH monitoring location in the fifth PDCCH monitoring location set is on the second frequency domain resource and is located in a fourth sub-time window, and the third sub-time and the fourth sub-time window are determined based on a time domain location of the first PUSCH.

Correspondingly, the terminal device detects the third DCI at the PDCCH monitoring location in the fourth PDCCH monitoring location set; and/or detects the third DCI at the PDCCH monitoring location in the fifth PDCCH monitoring location set.

Optionally, the terminal device directly determines a second time window applicable to the two frequency domain resources, or the third sub-time window and the fourth sub-time window respectively applicable to the first frequency domain resource and the second frequency domain resource.

Optionally, the terminal device determines the fourth PDCCH monitoring location set on the first frequency domain resource in the third sub-time window, and determines the fifth PDCCH monitoring location set on the second frequency domain resource in the fourth sub-time window. If the terminal device supports detection of the third DCI on the two frequency domain resources, the terminal device detects the third DCI at all determined active monitoring locations; or if the terminal device does not support detection of the third DCI on the two frequency domain resources, the terminal device determines, according to a specific criterion, whether to detect the third DCI on the first frequency domain resource or the second frequency domain resource. A determining method is similar to that in S809.

In an embodiment, when a fifth monitoring location in the fourth PDCCH monitoring set and a sixth monitoring location in the fifth PDCCH monitoring set overlap in time domain, the third DCI is sent at a seventh monitoring location.

When the fifth monitoring location in the fourth PDCCH monitoring set and the sixth monitoring location in the fifth PDCCH monitoring set overlap in time domain, a symbol on which the fifth monitoring location is located is a downlink symbol or a flexible symbol, and a symbol on which the sixth monitoring location is located includes an uplink symbol, the third DCI is detected at the fifth monitoring location; or when the fifth monitoring location in the fourth PDCCH monitoring set and the sixth monitoring location in the fifth PDCCH monitoring set overlap in time domain, a symbol on which the fifth monitoring location is located is a downlink symbol or a flexible symbol, and a symbol on which the sixth monitoring location is located is a downlink symbol or a flexible symbol, the third DCI is sent at the seventh monitoring location, where the seventh monitoring location is a preset monitoring location in the fifth monitoring location and the sixth monitoring location.

Optionally, the third DCI is scrambled by using a TC-RNTI, and the terminal device detects the third DCI based on the TC-RNTI. A value of the TC-RNTI is indicated by the RAR in step S810.

Optionally, after successfully detecting the third DCI sent to the terminal device, the terminal device receives a third PDSCH based on an indication of the third DCI. The third PDSCH carries a contention resolution identifier. When the contention resolution identifier is the same as the ID of the terminal device that is reported by the terminal device in S811, the terminal device considers that contention resolution succeeds.

Optionally, if the terminal device successfully detects the third DCI sent to the terminal device, where the third DCI carries information indicating a sixth frequency domain resource, the terminal device performs the following step.

S813: The terminal device generates feedback information HARQ-ACK based on a decoding result of the third PDSCH, and sends a second PUCCH on the sixth frequency domain resource, where the second PUCCH carries the feedback information of the third PDSCH.

The sixth frequency domain resource belongs to the first frequency domain resource or the second frequency domain resource.

Correspondingly, the network device receives the feedback information HARQ-ACK of the third PDSCH on the sixth frequency domain resource.

Optionally, the feedback information includes an ACK or a NACK to respectively indicate that decoding of the third PDSCH succeeds or fails.

Optionally, the third DCI carries the information indicating the sixth frequency domain resource, in other words, the third DCI indicates whether the second PUCCH is sent on the first frequency domain resource or the second frequency domain resource. Optionally, the third DCI further carries other information, for example, a time domain location, a frequency domain location, and a modulation scheme of the second PUCCH on a corresponding frequency domain resource. In this way, the network device may select, based on frame structures of the two frequency domain resources, a frequency domain resource that has a closest uplink part to send the first PUCCH, so that a delay in sending the second PUCCH is reduced.

It may be understood that the embodiments and detailed implementations corresponding to FIG. 7 and FIG. 8 may be used independently or in combination. The implementations corresponding to FIG. 7 and FIG. 8 may alternatively be combined.

It may be understood that, to implement the functions in the foregoing embodiments, the network device and the terminal device include corresponding hardware structures and/or software modules for performing the functions. A person skilled in the art should be easily aware that, with reference to the units and the method steps of the examples described in embodiments disclosed in this application, this application can be implemented in a form of hardware or a combination of hardware and computer software. Whether a function is performed by hardware or hardware driven by computer software depends on particular application scenarios and design constraints of the technical solutions.

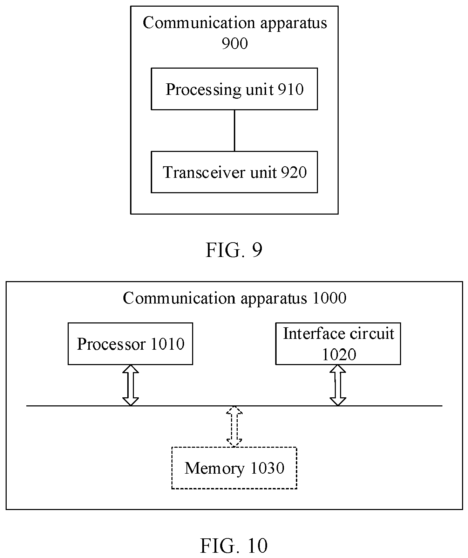

FIG. 9 and FIG. 10 are schematic diagrams of structures of possible communication apparatuses according to embodiments of this application. These communication apparatuses may be configured to implement functions of the terminal device or the network device in the foregoing method embodiments, and therefore can also achieve beneficial effects of the foregoing method embodiments. In embodiments of this application, the communication apparatus may be one of the terminals 120a to 120j shown in FIG. 1, or may be the base station 110a or 110b shown in FIG. 1, or may be a module (for example, a chip) used in the terminal or the base station.

As shown in FIG. 9, a communication apparatus 900 includes a processing unit 910 and a transceiver unit 920. The communication apparatus 900 is configured to implement functions of the terminal device or the network device in the method embodiment shown in FIG. 7 or FIG. 8.

When the communication apparatus 900 is configured to implement functions of the terminal device in the method embodiment shown in FIG. 7, the transceiver unit 920 is configured to receive a first common signal, the processing unit 910 is configured to determine a frequency domain resource of a second downlink common signal based on a frequency domain resource of the first downlink common signal, and the transceiver unit 920 is further configured to receive the second downlink common signal on the frequency domain resource of the second downlink common signal.

When the communication apparatus 900 is configured to implement functions of the network device in the method embodiment shown in FIG. 7, the transceiver unit 920 is configured to send first-type downlink common signals and second-type downlink common signals to a terminal device. The first-type downlink common signals include one or more common signals. The second-type downlink common signals include one or more common signals. A frequency domain resource of the second-type common signal is related to a frequency domain resource of the first-type downlink common signal.

When the communication apparatus 900 is configured to implement functions of the terminal device in the method embodiment shown in FIG. 8, the transceiver unit 920 is configured to: receive a first downlink common signal and system information, and send, on a first random access resource in a random access resource set, a random access preamble corresponding to the first random access resource. The first downlink common signal indicates a time-frequency location of control information for scheduling the system information, the system information carries information indicating a first frequency domain resource and a second frequency domain resource, and the first frequency domain resource and the second frequency domain resource correspond to different uplink-downlink configurations. The random access resource set includes a random access resource on the first frequency domain resource and a random access resource on the second frequency domain resource.

The processing unit 910 is configured to determine the first random access resource from the random access resource set and the corresponding random access preamble.

When the communication apparatus 900 is configured to implement functions of the network device in the method embodiment shown in FIG. 8, the transceiver unit 920 is configured to send a first downlink common signal and system information to a terminal device. The first downlink common signal indicates a time-frequency location of control information for scheduling the system information, the system information carries information indicating a first frequency domain resource and a second frequency domain resource, and the first frequency domain resource and the second frequency domain resource correspond to different uplink-downlink configurations. The processing unit 910 is configured to determine a first random access resource from a random access resource set. The transceiver unit 920 is further configured to receive, on the first random access resource, a random access preamble corresponding to the first random access resource. The first random access resource belongs to a random access resource subset, the random access resource subset is a subset of the random access resource set, and the random access resource set includes a random access resource on the first frequency domain resource and a random access resource on the second frequency domain resource.

The transceiver unit 920 is configured to send/receive information, and the processing unit 910 is configured to perform data processing or logic processing. More detailed descriptions of the processing unit 910 and the transceiver unit 920 may be obtained by directly referring to related descriptions in the method embodiment shown in FIG. 7 or FIG. 8. Details are not described herein again.

As shown in FIG. 10, a communication apparatus 1000 includes a processor 1010 and an interface circuit 1020. The processor 1010 and the interface circuit 1020 are coupled to each other. It may be understood that the interface circuit 1020 may be a transceiver or an input/output interface. Optionally, the communication apparatus 1000 may further include a memory 1030, configured to store instructions to be executed by the processor 1010, store input data required by the processor 1010 to run the instructions, or store data generated after the processor 1010 runs the instructions.

When the communication apparatus 1000 is configured to implement the method shown in FIG. 7 or FIG. 8, the processor 1010 is configured to implement functions of the processing unit 910, and the interface circuit 1020 is configured to implement functions of the transceiver unit 920.

When the communication apparatus is a chip used in a terminal device, the chip of the terminal device implements functions of the terminal device in the foregoing method embodiments. The chip of the terminal device receives information from another module (for example, a radio frequency module or an antenna) in the terminal device. The information is sent by a network device to the terminal device. Alternatively, the chip of the terminal device sends information to another module (for example, a radio frequency module or an antenna) in the terminal device. The information is sent by the terminal device to a network device.

When the communication apparatus is a chip used in a network device, the chip of the network device implements functions of the network device in the foregoing method embodiments. The chip of the network device receives information from another module (for example, a radio frequency module or an antenna) in the network device. The information is sent by a terminal device to the network device. Alternatively, the chip of the network device sends information to another module (for example, a radio frequency module or an antenna) in the network device. The information is sent by the network device to a terminal device.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any conventional processor.

The method steps in embodiments of this application may be implemented by hardware, or may be implemented by a processor executing software instructions. The software instructions may be formed by a corresponding software module, and the software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in a network device or a terminal device. Certainly, the processor and the storage medium may alternatively exist in the network device or the terminal device as discrete components.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs and instructions. When the computer programs or instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or instructions may be stored in a computer-readable storage medium or may be transmitted from a computer-readable storage medium to another computer-readable storage medium. For example, the computer programs or instructions may be wirelessly or wiredly transmitted from a website, computer, server, or data center to another website, computer, server, or data center. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid state disk. The computer-readable storage medium may be a volatile or non-volatile storage medium, or may include a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects and represents that three relationships may exist. For example, A and/or B may represent the following three cases: Only A exists, both A and B exist, and only B exists. A and B may be singular or plural. In the text descriptions of this application, the character "/" usually indicates that an "or" relationship exists between associated objects. In the formulas of this application, the character "/" indicates that a "division" relationship exists between associated objects.

It may be understood that numerical symbols in embodiments of this application are differentiated merely for ease of description, but are not used to limit the scope of embodiments of this application. The sequence numbers of the foregoing processes do not mean execution sequences. The execution sequences of the processes should be determined based on functions and internal logic of the processes.

**Claims**

1. A communication method, comprising:

receiving a first downlink common signal, wherein the first downlink common signal indicates a time-frequency location of control information for scheduling system information;
receiving the system information, wherein the system information carries information indicating a first frequency domain resource and a second frequency domain resource, and the first frequency domain resource and the second frequency domain resource correspond to different uplink-downlink configurations; and
sending, on a first random access resource in a random access resource set, a random access preamble corresponding to the first random access resource, wherein the random access resource set comprises a random access resource on the first frequency domain resource and a random access resource on the second frequency domain resource.

2. The method according to claim 1, further comprising:

determining a downlink common signal resource subset, wherein the downlink common signal resource subset comprises a downlink common signal resource on the first frequency domain resource and/or a downlink common signal resource on the second frequency domain resource;

determining an association relationship between the random access resource set and the downlink common signal resource subset, wherein the association relationship comprises a correspondence between a downlink common signal resource in the downlink common signal resource subset and a random access resource subset in the random access resource set; and

determining, based on the association relationship, a random access resource subset corresponding to a first downlink common signal resource, wherein the first downlink common signal resource is a resource corresponding to the first downlink common signal, the resource of the first downlink common signal is a resource in the downlink common signal resource subset, all random access resources in the random access resource subset belong to the random access resource set, and the random access resource subset comprises the first random access resource.

3. The method according to claim 2, wherein the determining a downlink common signal resource subset comprises: receiving first indication information and second indication information, determining a first downlink common signal resource subset based on the first indication information, wherein a downlink common signal in the first downlink common signal resource subset belongs to the first frequency domain resource, and determining a second downlink common signal resource subset based on the second indication information, wherein a downlink common signal in the second downlink common signal resource subset belongs to the second frequency domain resource, and the downlink common signal resource subset is a union set of the first downlink common signal resource subset and the second downlink common signal resource subset.

4. The method according to claim 2 or 3, wherein the association relationship comprises at least one of a first association relationship, a second association relationship, a third association relationship, or a fourth association relationship, the first association relationship is an association relationship between a first random access resource set on the first frequency domain resource and the first downlink common signal resource subset, the second association relationship is an association relationship between a second random access resource set on the second frequency domain resource and the first downlink common signal resource subset, the third association relationship is an association relationship between the first random access resource set on the first frequency domain resource and the second downlink common signal resource subset, and the fourth association relationship is an association relationship between the second random access resource set on the second frequency domain resource and the second downlink common signal resource subset.

5. The method according to claim 2, wherein the determining a downlink common signal resource subset comprises: receiving third indication information, and determining a third downlink common signal resource subset based on the third indication information, wherein the downlink common signal resource subset is equal to the third downlink common signal resource subset, the third downlink common signal resource subset is a subset of a third downlink common signal resource set, the third downlink common signal resource set corresponds to a third downlink common signal pattern, and the third downlink common signal resource set comprises a downlink common signal resource on the first frequency domain resource and a downlink common signal resource on the second frequency domain resource.

6. The method according to claim 5, further comprising: receiving downlink common signal pattern indication information, wherein the downlink common signal pattern indication information indicates an index of the third downlink common signal pattern, and the third downlink common signal pattern is used to define a time domain location of each common signal in the third downlink common signal set on the first frequency domain resource or the second frequency domain resource.

7. The method according to any one of claims 1 to 6, wherein the method further comprises:

detecting second downlink control information DCI at a PDCCH monitoring location in a second physical downlink control channel PDCCH monitoring location set; and/or
detecting second DCI at a PDCCH monitoring location in a third PDCCH monitoring location set, wherein the second DCI is used to schedule a second physical downlink shared channel PDSCH, the PDCCH monitoring location in the second PDCCH monitoring location set is on the first frequency domain resource and is located in a first sub-time window, the PDCCH monitoring location in the third PDCCH monitoring location set is on the second frequency domain resource and is located in a second sub-time window, and the first sub-time window and the second sub-time window are determined based on the first random access resource.

8.  The method according to claim 7, wherein

when a second monitoring location in the second PDCCH monitoring location set and a third monitoring location in the third PDCCH monitoring location set overlap in time domain, a symbol on which the second monitoring location is located is a downlink symbol or a flexible symbol, and a symbol on which the third monitoring location is located comprises an uplink symbol, the second DCI is detected at the second monitoring location; or
when a second monitoring location in the second PDCCH monitoring location set and a third monitoring location in the third PDCCH monitoring location set overlap in time domain, a symbol on which the second monitoring location is located is a downlink symbol or a flexible symbol, and a symbol on which the third monitoring location is located is also a downlink symbol or a flexible symbol, the second DCI is monitored at a fourth monitoring location, wherein the fourth monitoring location is one of the second monitoring location and the third monitoring location.

9.  The method according to claim 7 or 8, wherein
the second DCI is scrambled by using a random access radio network temporary identifier RA-RNTI, and a value of the RA-RNTI is determined based on a frequency domain resource on which the first random access resource is located and a time-frequency location of the first random access resource in the frequency domain resource on which the first random access resource is located.

10. The method according to any one of claims 7 to 9, wherein the method further comprises:

receiving a random access response RAR, wherein the RAR is carried on the second PDSCH, the RAR is used to schedule a first physical uplink shared channel PUSCH, the RAR carries indication information indicating a fourth frequency domain resource, and the fourth frequency domain resource belongs to the first frequency domain resource or the second frequency domain resource; and
sending the first PUSCH on the fourth frequency domain resource.

11. The method according to any one of claims 1 to 10, wherein the method further comprises:

detecting third DCI at a PDCCH monitoring location in a fourth PDCCH monitoring location set; and/or
detecting third DCI at a PDCCH monitoring location in a fifth PDCCH monitoring location set, wherein the third DCI is used to schedule a third PDSCH; and the PDCCH monitoring location in the fourth PDCCH monitoring location set is on the first frequency domain resource and is located in a third sub-time window, the PDCCH monitoring location in the fifth PDCCH monitoring location set is on the second frequency domain resource and is located in a fourth sub-time window, and the third sub-time and the fourth sub-time window are determined based on a time domain location of the first PUSCH.

12. The method according to claim 11, wherein

when a fifth monitoring location in the fourth PDCCH monitoring set and a sixth monitoring location in the fifth PDCCH monitoring set overlap in time domain, a symbol on which the fifth monitoring location is located is a downlink symbol or a flexible symbol, and a symbol on which the sixth monitoring location is located comprises an uplink symbol, the third DCI is detected at the fifth monitoring location; or
when a fifth monitoring location in the fourth PDCCH monitoring set and a sixth monitoring location in the fifth PDCCH monitoring set overlap in time domain, a symbol on which the fifth monitoring location is located is a downlink symbol or a flexible symbol, and a symbol on which the sixth monitoring location is located is a downlink symbol or a flexible symbol, the third DCI is detected at a seventh monitoring location, wherein the seventh monitoring location is a preset monitoring location in the fifth monitoring location and the sixth monitoring location.

13. The method according to claim 11 or 12, wherein the third DCI carries information indicating a sixth frequency domain resource, the sixth frequency domain resource belongs to the first frequency domain resource or the second frequency domain resource, and the method further comprises:
sending feedback information of the third PDSCH on the sixth frequency domain resource.

14. A communication method, comprising:

sending a first downlink common signal, wherein the first downlink common signal indicates a time-frequency location of control information for scheduling system information;
sending the system information, wherein the system information carries information indicating a first frequency domain resource and a second frequency domain resource, and the first frequency domain resource and the second frequency domain resource correspond to different uplink-downlink configurations; and
receiving, on a first random access resource, a random access preamble corresponding to the first random access resource, wherein the first random access resource belongs to a random access resource subset, the random access resource subset is a subset of a random access resource set, and the random access resource set comprises a random access resource on the first frequency domain resource and a random access resource on the second frequency domain resource.

15. The method according to claim 14, further comprising:
determining, based on an association relationship between the random access resource set and a downlink common signal resource subset, a random access resource subset corresponding to a resource of the first downlink common signal, wherein the association relationship comprises a correspondence between a downlink common signal resource in the downlink common signal resource subset and a random access resource subset in the random access resource set; and the resource of the first downlink common signal is a resource corresponding to the first downlink common signal, and the resource of the first downlink common signal is a resource in the downlink common signal resource subset.

16. The method according to claim 15, wherein
the system information further carries first indication information and second indication information, the first indication information indicates location information of a first downlink common signal resource subset, the second indication information indicates location information of a second downlink common signal resource subset, a downlink common signal in the first downlink common signal resource subset belongs to the first frequency domain resource, a downlink common signal in the second downlink common signal resource subset belongs to the second frequency domain resource, and the downlink common signal resource subset is a union set of the first downlink common signal resource subset and the second downlink common signal resource subset.

17. The method according to claim 15 or 16, wherein
the association relationship comprises at least one of a first association relationship, a second association relationship, a third association relationship, or a fourth association relationship, the first association relationship is an association relationship between a first random access resource set on the first frequency domain resource and the first downlink common signal resource subset, the second association relationship is an association relationship between a second random access resource set on the second frequency domain resource and the first downlink common signal resource subset, the third association relationship is an association relationship between the first random access resource set on the first frequency domain resource and the second downlink common signal resource subset, and the fourth association relationship is an association relationship between the second random access resource set on the second frequency domain resource and the second downlink common signal resource subset.

18. The method according to claim 15, wherein
the system information further carries third indication information, the third indication information indicates location information of a third downlink common signal resource subset, the downlink common signal resource subset is equal to the third downlink common signal resource subset, the third downlink common signal resource subset is a subset of a third downlink common signal resource set, the third downlink common signal resource set corresponds to a third downlink common signal pattern, and common signal resources comprised in the third downlink common signal resource set are located on the first frequency domain resource and the second frequency domain resource.

19. The method according to claim 18, further comprising:
sending common signal pattern indication information, wherein the downlink common signal pattern indication information indicates an index of the third downlink common signal pattern, and the third downlink common signal pattern is used to define a time domain location of each common signal in the third downlink common signal set on the first frequency domain resource or the second frequency domain resource.

20. The method according to any one of claims 14 to 19, wherein the method further comprises:

sending second downlink control information DCI at a PDCCH monitoring location in a second physical downlink control channel PDCCH monitoring location set; and/or
sending second DCI at a PDCCH monitoring location in a third PDCCH monitoring location set, wherein the second DCI is used to schedule a second physical downlink shared channel PDSCH, the PDCCH monitoring location in the second PDCCH monitoring location set is on the first frequency domain resource and is located in a first sub-time window, the PDCCH monitoring location in the third PDCCH monitoring location set is on the second frequency domain resource and is located in a second sub-time window, and the first sub-time window and the second sub-time window are determined based on the first random access resource.

21. The method according to claim 20, further comprising:

when a second monitoring location in the second PDCCH monitoring location set and a third monitoring location in the third PDCCH monitoring location set overlap in time domain, a symbol on which the second monitoring location is located is a downlink symbol or a flexible symbol, and a symbol on which the third monitoring location is located comprises an uplink symbol, sending the second DCI at the second monitoring location; or
when a second monitoring location in the second PDCCH monitoring location set and a third monitoring location in the third PDCCH monitoring location set overlap in time domain, a symbol on which the second monitoring location is located is a downlink symbol or a flexible symbol, and a symbol on which the third monitoring location is located is also a downlink symbol or a flexible symbol, sending the second DCI at a fourth monitoring location, wherein the fourth monitoring location is one of the second monitoring location and the third monitoring location.

22. The method according to claim 20 or 21, wherein
the second DCI is scrambled by using a random access radio network temporary identifier RA-RNTI, and a value of the RA-RNTI is determined based on a frequency domain resource on which the first random access resource is located and a time-frequency location of the first random access resource in the frequency domain resource on which the first random access resource is located.

23. The method according to any one of claims 20 to 22, wherein the method further comprises:

sending a random access response RAR to a terminal device, wherein the RAR is carried on the second PDSCH, the RAR is used to schedule a first physical uplink shared channel PUSCH, the RAR carries information indicating a fourth frequency domain resource, and the fourth frequency domain resource belongs to the first frequency domain resource or the second frequency domain resource; and
receiving the first PUSCH on the fourth frequency domain resource.

24. The method according to claim 23, wherein the method further comprises:

sending third DCI at a PDCCH monitoring location in a fourth PDCCH monitoring location set; and/or
sending third DCI at a PDCCH monitoring location in a fifth PDCCH monitoring location set, wherein the third DCI is used to schedule a third PDSCH; and the PDCCH monitoring location in the fourth PDCCH monitoring location set is on the first frequency domain resource and is located in a third sub-time window, the PDCCH monitoring location in the fifth PDCCH monitoring location set is on the second frequency domain resource and is located in a fourth sub-time window, and the third sub-time and the fourth sub-time window are determined based on a time domain location of the first PUSCH.

25. The method according to claim 24, wherein

when a fifth monitoring location in the fourth PDCCH monitoring set and a sixth monitoring location in the fifth PDCCH monitoring set overlap in time domain, a symbol on which the fifth monitoring location is located is a downlink symbol or a flexible symbol, and a symbol on which the sixth monitoring location is located comprises an uplink symbol, the third DCI is detected at the fifth monitoring location; or
when a fifth monitoring location in the fourth PDCCH monitoring set and a sixth monitoring location in the fifth PDCCH monitoring set overlap in time domain, a symbol on which the fifth monitoring location is located is a downlink symbol or a flexible symbol, and a symbol on which the sixth monitoring location is located is a downlink symbol or a flexible symbol, the third DCI is sent at a seventh monitoring location, wherein the seventh monitoring location is a preset monitoring location in the fifth monitoring location and the sixth monitoring location.

26. The method according to claim 24 or 25, wherein the third DCI carries information indicating a sixth frequency domain resource, the sixth frequency domain resource belongs to the first frequency domain resource or the second frequency domain resource, and the method further comprises:
receiving feedback information HARQ-ACK of the third PDSCH on the sixth frequency domain resource, wherein the sixth frequency domain resource belongs to the first frequency domain resource or the second frequency domain resource.

27. A communication apparatus, comprising a module configured to perform the method according to any one of claims 1 to 13.

28. A communication apparatus, comprising a module configured to perform the method according to any one of claims 14 to 26.

29. A communication apparatus, comprising a processor and an interface circuit, wherein the interface circuit is configured to receive a signal from a communication apparatus other than the communication apparatus and transmit the signal to the processor or send a signal from the processor to a communication apparatus other than the communication apparatus, and the processor is configured to implement the method according to any one of claims 1 to 13 by using a logic circuit or by executing code instructions.

30. A communication apparatus, comprising a processor and an interface circuit, wherein the interface circuit is configured to receive a signal from a communication apparatus other than the communication apparatus and transmit the signal to the processor or send a signal from the processor to a communication apparatus other than the communication apparatus, and the processor is configured to implement the method according to any one of claims 14 to 26 by using a logic circuit or by executing code instructions.

31. A computer-readable storage medium storing instructions, wherein when the instructions run on a communication apparatus, the communication apparatus is enabled to perform the method according to any one of claims 1 to 26.

32. A computer program, wherein when the computer program is executed by a communication apparatus, the method according to any one of claims 1 to 26 is implemented.

33. A communication system, comprising the communication apparatus according to claim 27 or 29 and the communication apparatus according to claim 28 or 30.

FIG. 1

239

192

182

Subcarrier number

56

47

0

PBCH

PSS | PBCH | SSS | PBCH

PBCH

0   1   2   3

OFDM symbol number

FIG. 2

Subcarrier spacing 30 kHz

Slot n    Slot n+1    Slot n+2    Slot n+3

0 1 2 3 4 5 6 7 8 9 10 11 12 13 0 1 2 3 4 5 6 7 8 9 10 11 12 13 0 1 2 3 4 5 6 7 8 9 10 11 12 13 0 1 2 3 4 5 6 7 8 9 10 11 12 13

FIG. 3

EP 4 301 065 A1

| Slot n | Slot n+1 | Slot n+2 | Slot n+3 | Slot n+4 | Slot n+5 | Slot n+6 | Slot n+7 | Slot n+8 | Slot n+9 |
|---|---|---|---|---|---|---|---|---|---|

SSB    SIB1    Msg1    RAR    Msg3

⬚ Downlink    ⬚ Uplink

FIG. 4

| Slot n | Slot n+1 | Slot n+2 | Slot n+3 | Slot n+4 | Slot n+5 | Slot n+6 | Slot n+7 | Slot n+8 | Slot n+9 |
|---|---|---|---|---|---|---|---|---|---|

⬚ Downlink    ⬚ Uplink

FIG. 5

FIG. 6

Network
device

Terminal
device

701

The network device sends
first-type downlink common
signals to the terminal device

702

The terminal device detects
the first-type downlink
common signals

703

The terminal device
receives second-type
common signals sent by
the network device

FIG. 7

FIG. 8

Communication apparatus
900

Processing unit 910

Transceiver unit 920

FIG. 9

Communication apparatus 1000

Processor 1010

Interface circuit
1020

Memory 1030

FIG. 10

## INTERNATIONAL SEARCH REPORT

International application No.

**PCT/CN2021/081626**

| A. | CLASSIFICATION OF SUBJECT MATTER |
|---|---|

H04W 72/04(2009.01)i

According to International Patent Classification (IPC) or to both national classification and IPC

| B. | FIELDS SEARCHED |
|---|---|

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

WPI; EPODOC; CNKI; CNPAT; 3GPP: 随机接入, 前导码, 等待, 时延, 降低, 短, 初始接入, 上行, 下行, 配置, 不同, 最早, 时机, RACH, SSB, SIB, RACHConfig, resource, preamble, DL, UL, SUL, NUL, dominant, structure, slot, wait, latency, low, dynamic, mix, time, gap, occasion

| C. | DOCUMENTS CONSIDERED TO BE RELEVANT |
|---|---|

| Category* | Citation of document, with indication, where appropriate, of the relevant passages | Relevant to claim No. |
|---|---|---|
| A | ERICSSON et al. "Random access with carrier aggregation" *3GPP TSG-RAN WG2 #68bis Tdoc R2-100429,* 22 January 2010 (2010-01-22), section 2 | 1-33 |
| A | CN 111436135 A (HUAWEI TECHNOLOGIES CO., LTD.) 21 July 2020 (2020-07-21) entire document | 1-33 |
| A | CN 105430590 A (CHINA ACADEMY OF TELECOMMUNICATIONS TECHNOLOGY) 23 March 2016 (2016-03-23) entire document | 1-33 |
| A | ERICSSON. "Remaining details on RACH procedure" *3GPP TSG RAN WG1 Meeting #91 R1-1720941,* 01 December 2017 (2017-12-01), entire document | 1-33 |
| A | HUAWEI等 (HUAWEI et al.). "System design aspects on duplexing flexibility" *3GPP TSG RAN WG1 Meeting #88bis R1- 1704243,* 07 April 2017 (2017-04-07), entire document | 1-33 |
| A | US 2018124829 A1 (LG ELECTRONICS INC.) 03 May 2018 (2018-05-03) entire document | 1-33 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 December 2021** | **14 December 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/081626**

| Patent document cited in search report | | | Publication date (day/month/year) | Patent family member(s) | | | Publication date (day/month/year) |
|---|---|---|---|---|---|---|---|
| CN | 111436135 | A | 21 July 2020 | WO | 2020143723 | A1 | 16 July 2020 |
| CN | 105430590 | A | 23 March 2016 | None | | | |
| US | 2018124829 | A1 | 03 May 2018 | WO | 2016175631 | A1 | 03 November 2016 |
| | | | | EP | 3289819 | A1 | 07 March 2018 |

Form PCT/ISA/210 (patent family annex) (January 2015)